# EUROPÄISCHE PATENTSCHRIFT

(11) **EP 2 206 899 B1**
(45) Veröffentlichungstag und Bekanntmachung des Hinweises auf die Patenterteilung: **22.02.2012**
(21) Anmeldenummer: 09015225.7
(22) Anmeldetag: 09.12.2009
(51) Int. Cl.: F01N 13/10

(54) **Verfahren zur Nachbehandlung eines Abgasstroms einer mehrzylindrigen Brennkkraftmaschine eines Fahrzeuges sowie Abgasnachbehandlungsvorrichtung**
Method for treating an exhaust gas flow of a multi-cylinder combustion engine of a vehicle and exhaust gas treatment device
Procédé de post-traitement d'un flux de gaz d'un moteur à combustion multi-cylindrique d'un véhicule ainsi que l'installation de post-traitement des gaz d'échappement

(30) Priorität: 13.01.2009 DE 102009004417
(43) Veröffentlichungstag der Anmeldung: 14.07.2010
(73) Patentinhaber: MAN Truck & Bus AG, 80995 München (DE)
(72) Erfinder: Lämmermann, Reinhard, 90547 Stein (DE); Weiss, Joachim, 90522 Oberasbach (DE); Pappenheimer, Andreas, 91972 Ellingen (DE)

(56) Entgegenhaltungen:
- EP-A2- 1 243 767
- DE-A1- 19 849 495
- DE-A1-102004 032 589
- JP-A- 5 321 643
- JP-A- 59 007 747
- US-A1- 2005 086 936

## Beschreibung

Die Erfindung betrifft ein ein Verfahren zur Nachbehandlung eines Abgasstroms einer mehrzylindrigen Brennkraftmaschine eines Fahrzeuges, insbesondere eines Abgases einer mit Luftüberschuss betriebenen Brennkraftmaschine eines Nutzfahrzeuges, gekennzeichnet in Anspruch 1, sowie eine Vorrichtung zur Durchführung eines derartigen Verfahrens, gekennzeichnet in Anspruch 8.

Abgasnachbehandlungsvorrichtungen, mittels denen das von einer mehrzylindrigen Brennkraftmaschine abströmende Abgas so aufgereinigt wird, dass im Abgas vorhandene Schadstoffkonzentrationen vorgegebene Grenzwerte nicht überschreiten, sind allgemein bekannt. So ist beispielsweise aus der DE 10 2006 038 290 A1 ein Abgasnachbehandlungssystem zur Stickoxid- und Partikelreduzierung bei mit Luftüberschuss betriebenen Brennkraftmaschinen bekannt, bei der die Stickoxidreduzierung mittels eines eine selektive katalytische Reduktion (SCR) durchführenden SCR-Katalysators und die Partikelreduktion mittels eines Partikelabscheiders oder eines Partikelfilters erfolgt. Konkret wird hierbei den von der Brennkraftmaschine erzeugten und durch den Abgasstrang abströmenden Abgasen in einem motornahen Bereichein Reduktionsmittel zudosiert. Bei diesem Reduktionsmittel handelt es sich um eine wässrige Harnstofflösung oder um Harnstoff in fester Form. Die Zumessung des Reduktionsmittels erfolgt in Abhängigkeit von Betriebsparametern der Brennkraftmaschine, gesteuert über eine Motorsteuereinheit, wobei über eine Düse die wässrige Harnstofflösung unmittelbar vor einem Hydrolysekatalysator in den Abgasstrom eingesprüht wird. Mittels des Hydrolysekatalysators wird die wässrige Harnstofflösung unter Vermeidung von Nebenprodukten zumindest teilweise in Ammoniak und Wasserdampf überführt, so dass anschließend in einem stromab des Hydrolysekatalysators angeordneten SCR-Katalysator die Stickoxidreduzierung durch Reaktion der Stickoxide mit dem Ammoniak erfolgt.

Bei heute in Fahrzeugen, insbesondere in Nutzfahrzeugen betriebenen Brennkraftmaschinen ist üblicherweise eine wenigstens einstufige Turboladeranordnung vorhanden, die mithilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbine des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, eine für die Hydrolyse des Reduktionsmittels ausreichende Abgastemperatur zur Verfügung zu stellen. Selbst wenn Hydrolysekatalysatoren eingesetzt werden, reicht das Temperaturniveau zumeist nicht aus. Aus diesem Grund ist in der DE 10 2006 038 290 A1 weiter vorgesehen, den von der Brennkraftmaschine kommenden Abgasstrom bereits vor der Turbine des Abgasturboladers in einen Abgashauptstrom, der über die Turbine geführt ist und über diese den Verdichter antreibt, und einen Abgasteilstrom aufzuteilen. Der Abgasteilstrom ist über einen Oxidationskatalysator geführt, der einerseits in der normalen Strömungsrichtung des Abgases Stickstoffmonoxid in Stickstoffdioxid umsetzt und andererseits, zum Beispiel im Motorbremsbetrieb, evtl. mit dem Abgasstrom in Richtung Brennkraftmaschine zurückströmenden Ammoniak bzw. zurückströmendes, noch nicht umgesetztes Reduktionsmittel oxidiert. Stromab zum Oxidationskatalysator schließt sich im Abgasteilstrom ein Absperrorgang an. Stromab zum Absperrorgang wird mit einer Zumesseinrichtung das Reduktionsmittel in den Abgasteilstrom zugeführt, das durch die im Abgasteilstrom herrschende relativ hohe Abgastemperatur und den der Zuführstelle nachgeordneten Hydrolysekatalysator, Ammoniak abspaltet. Parallel zu dem Abgasteilstrom wird der Abgashauptstrom über einen Oxidationskatalysator geführt, der wiederum im Abgas enthaltenes Stickstoffmonoxid zu Stickstoffdioxid oxidiert. Stromab zum Oxidationskatalysator im Abgashauptstrom und stromab zum Hydrolysekatalysator im Abgasteilstrom vereinen sich die parallel geführten Abgasströme wieder und durchströmen einen stromabgelegenen Partikelabscheider, in dem die angelagerten Rußpartikel mithilfe des in den Oxidationskatalysatoren erzeugten Stickstoffdioxids zu Kohlenmonoxid, Kohlendioxid, Stickstoff und Stickstoffmonoxid kontinuierlich umgesetzt werden. Dem Partikelabscheider ist wiederum ein SCR-Katalysator nachgeordnet, der im Wege der selektiven katalytischen Reduktion die im Abgas vorhandenen Stickoxide in der zuvor beschriebenen Weise in Stickstoff und Wasserdampf überführt.

Weiter wird in dieser DE 10 2006 038 290 A1 in Verbindung mit einer zweiflutigen Turbine, bei der die eine Turbinenflut von einer ersten Gruppe von Zylindern und die andere Turbinenflut von einer zweiten Gruppe von Zylindern mit Abgas beschickt wird, vorgeschlagen, den Abgasteilstrom von einer der beiden Fluten abzuzweigen. Die Zylinder der Flut, von der der Abgasteilstrom abzweigt, sollen dann mit anderen Motorparametern, das heißt mit anderen Kraftstoffeinspritzzeiten oder -mengen betrieben werden als die Zylinder der anderen Flut. Dadurch soll zum Beispiel in der Startphase oder im Niedriglastbereich durch eine Nacheinspritzung im Expansions- oder Ausschubtakt die Abgastemperatur angehoben werden können. Weitere Ausführungen werden hierzu nicht gemacht.

Weiter ist aus der DE 10 2004 032 589 B4 eine Brennkraftmaschine bekannt, bei der von der Brennkraftmaschine ein Abgasstrang zweiflutig abgezweigt ist, wobei beide Abgasleitungen als Rohabgasleitungen zu einer Turbine eines Abgasturboladers geführt sind. Von einer der beiden Rohabgasleitungen ist eine sogenannte Waste-Gate-Leitung abgezweigt, mittels der bei einem Überdruck in der Rohabgasleitung überschüssiges Abgas abgeblasen werden kann. Desweiteren ist von einer der beiden Rohabgasleitungen eine Bypassleitung abgezweigt, die es ermöglicht, das Abgasnachbehandlungselement zu umgehen.

Aus der DE 0153414 ist weiter eine Abgasführung für Mehrzylinderbrennkraftmaschinen mit einer Zylinderabschaltung und einer Abgasnachbehandlungsmöglichkeit bekannt, bei der die Abgasleitungen der abschaltbaren Zylinder in eine gesonderte Sammelleitung münden. Die Abgasleitungen der ständig arbeitenden Zylinder sind über eine Sammelleitung an einen Katalysator angeschlossen, dem ein Wäscher nachgeordnet ist, mit dem die Sammelleitung der abschaltbaren Zylinder direkt verbunden ist. Mit einem derartigen Aufbau soll der Katalysator als Abgasnachbehandlungselement kleiner ausgeführt werden können als bei solchen Aufbauten, bei dem sämtlicher Abgasstrom über den Katalysator geführt ist. Nachteiligerweise gelangt hier jedoch bei der befeuerten Betriebsweise der abschaltbaren Zylindergruppe das Abgas im Wesentlichen ungereinigt in die Umgebung.

Weiter ist aus der DE 10 2004 034 314 A1 eine Brennkraftmaschine mit mehreren Zylindern bekannt, die einen Turbolader sowie einen ersten und einen zweiten Abgasstrang aufweist, wobei eine Turbine des Turboladers dem ersten Abgasstrang zugeordnet ist. Ein erhöhtes Drehmoment und eine erhöhte Leistung sollen dadurch erreicht werden, dass eine Umgehungs-Abgasleitung, ausgehend von wenigstens einem Zylinder, der dem ersten Abgasstrang zugeordnet ist, unter Umgebung des wenigstens einen Turboladers mit dem ersten Abgasstrang verbunden ist.

Aus der DE 196 18 169 C1 ist ein Abgasturbolader für eine Brennkraftmaschine bekannt, dessen Turbine ein Laufrad und ein Turbinengehäuse mit zwei durch eine Trennwand getrennten Einlaufkanälen aufweist, wobei von einem der Einlaufkanäle ein Bypasskanal abzweigt, in dem ein Bypassventil angeordnet ist und wobei über den Bypasskanal stromauf eines Laufradeintrittes Abgas von dem Einlaufkanal abgeführt werden kann. Das Bypassventil ist in der Trennwand angeordnet und die Strömungsverbindung wahlweise zwischen einem der beiden Einlaufkanäle oder gleichzeitig beiden Einlaufkanälen und dem Bypasskanal herstellbar oder unterbrechbar, wobei ein Abschnitt des Bypasskanals durch die Trennwand gebildet ist und in dem besagten Abschnitt Öffnungen zur strömungsmäßigen Verbindung der Einlaufkanäle mit dem Bypasskanal angeordnet sind. Die Strömungsverbindung zwischen den Einlaufkanälen und dem Bypasskanal ist über ein den Öffnungen zugeordnetes Schließelement steuerbar, wobei besagter Abschnitt des Bypasskanals als Zylinderhülse und das Schließelement als in dieser angeordneter Drehschieber ausgebildet ist. Der Drehschieber weist mit den Öffnungen in Überdeckung bringbare Strömungskanäle auf. Mit einem derartigen Aufbau soll der Aufstaudruck in den einzelnen Fluten möglichst variabel regelbar sein.

Aus der DE 198 57 234 C2 ist weiter eine Vorrichtung zur Abgasrückführung für eine aufgeladene Brennkraftmaschine bekannt, bei der ein Abgasturbolader mit einer Abgasturbine und einem Verdichter vorgesehen ist, wobei die Abgasturbine als zweiflutige Turbine ausgebildet ist. Die Kanäle der beiden Fluten sind asymmetrisch, mit einem kleineren und einem größeren Kanal ausgebildet. Die Abgasturbine weist zur Änderung des Abgasdurchsatzes eine variable Geometrie auf. Durch eine Regeleinrichtung ist der Druck in der Abgasrückführungsleitung derart steuerbar, dass dieser höher einstellbar ist als der Druck in der Ladeluftleitung nach dem Verdichter. Ein ähnlicher Aufbau ist auch aus der DE 101 52 804 A1 sowie aus der DE 10 2004 030 703 A1 und der DE 103 57 925 A1 bekannt.

Aus der DE 10 2004 032 589 A1 ist weiter eine Brennkraftmaschine mit wenigstens einer ersten und einer zweiten Gruppe von jeweils einem oder mehreren Brennräumen bekannt, wobei der oder die Brennräume der ersten Gruppe unabhängig von dem oder den Brennräumen der zweiten Gruppe mit Brennstoff versorgbar sind, und einem Abgasstrang mit einer ersten, aus der ersten Brennraumgruppe abführenden Abgaszweigleitung und einer zweiten, aus der zweiten Brennraumgruppe abführenden Abgaszweigleitung und mit wenigstens einer Abgasnachbehandlungseinheit, die eintrittsseitig mit der ersten und zweiten Abgaszweigleitung in Verbindung steht.

Eine Anordnung die der DE 10 2004 032 589 A1 vergleichbar ist, beschreibt auch die JP 59 007747 A.

Demgegenüber ist es Aufgabe der vorliegenden Erfindung, ein Verfahren zur Nachbehandlung eines Abgasstroms einer mehrzylindrigen Brennkraftmaschine eines Fahrzeuges, insbesondere eines Abgases einer mit Luftüberschuss betriebenen Brennkraftmaschine eines Nutzfahrzeuges, sowie eine Abgasnachbehandlungsvorrichtung zur Durchführung eines derartigen Verfahrens zur Verfügung zu stellen, mittels dem bzw. der eine Abgasnachbehandlung insbesondere in definierten Betriebszuständen, wie beispielsweise einem Leerlaufbetrieb oder einem Schwachlast- bzw. Teillastbetrieb der Brennkraftmaschine, bauteiltechnisch unaufwendig sowie steuerungs- und regelungstechnisch einfach durchgeführt und eine gewünschte Aufheiztemperatur der Abgasnachbehandlungselemente auf schnelle Weise erreicht werden kann.

Diese Aufgabe wird gelöst mit den Merkmalen der unabhängigen Ansprüche. Vorteilhafte Ausgestaltungen hierzu sind jeweils Gegenstand der darauf rückbezogenen Unteransprüche.

Erfindungsgemäß ist ein mehrflutig von der Brennkraftmaschine abzweigender Abgasstrang vorgesehen, der mehrere von einem Rohabgasstrom durchströmte und jeweils unterschiedlichen Gruppen von Zylindern der Brennkraftmaschine zugeordnete Rohabgasleitungen aufweist. Weiter weist die Vorrichtung wenigstens eine bevorzugt mittels wenigstens eines Bypass-Absperrelementes absperrbare Bypassleitung auf, die stromauf einer mehrflutigen Abgasturbine eines Abgasturboladers von wenigstens einer, bevorzugt von lediglich einem Teil der zur Abgasturbine geführten Rohabgasleitungen abzweigt und die stromab der Abgasturbine an einer Einmündposition in eine von der Abgasturbine abgehende Turbinen-Abführleitung einmündet, wobei der Abgasturbine stromauf der Einmündstelle der Bypassleitung wenigstens ein Abführleitungs-Abgasnachbehandlungselement nachgeschaltet ist. In der Turbinen-Abführleitung ist bevorzugt ein Abführleitungsleitungs-Absperrelement vorgesehen. Zudem weist die Vorrichtung auch wenigstens eine Steuer- und/oder Regeleinrichtung auf, mittels der in einem in Abhängigkeit von definierten Betriebsparametern der Brennkraftmaschine vorgegebenen Bypass-Betrieb der Brennkraftmaschine, der insbesondere ein Leerlauf oder Schwachlastbetrieb der Brennkraftmaschine ist, ein Bypass-Abgasstrom von lediglich einem Rohabgasstrom oder von lediglich einem Teil der Rohabgasströme aus wenigstens einer im Bypassbetrieb eine Bypass-Zylindergruppe ausbildenden Gruppe von befeuert betriebenen Zylindern abgezweigt und als heißer Bypass-Abgasstrom an der Abgasturbine vorbei in Richtung Turbinen-Abführleitung bzw. zu einem der Abgasturbine nachgeschalteten Abgasnachbehandlungselement strömt. Gemäß einem weiteren Aspekt der erfindungsgemäßen Lösung ist zudem vorgesehen, dass im Bypass-Betrieb die wenigstens eine restliche Zylindergruppe der Brennkraftmaschine, von deren Rohabgasstrom der Bypass-Abgasstrom nicht abgezweigt wird, in Abhängigkeit von definierten Betriebsparametern der Brennkraftmaschine, insbesondere in Abhängigkeit von definierten Abgasrückführparametern und/oder Ansaugluftparametern und/oder Abgasnachbehandlungselement-Aufheizparametern, wahlweise befeuert, insbesondere teilbefeuert, oder nicht-befeuert betrieben wird.

Unter einer befeuerten Betriebsweise wird dabei grundsätzlich jede Betriebsweise verstanden, bei der die entsprechenden Zylinder mit Kraftstoff beschickt werden, d.h. nicht nur eine Betriebsweise, bei der die entsprechenden Zylinder vollbefeuert mit der im definierten Normalbetrieb vorgegebenen Kraftstoffmenge beschickt werden. So können die Zylinder betriebspunktabhängig mit unterschiedlichen Kraftstoffmengen beschickt und damit befeuert betrieben werden. Der befeuerte Betrieb umfasst daher ausdrücklich auch solche Betriebsweisen, bei denen die entsprechenden Zylinder mit einer gegenüber einem definierten Normalbetrieb reduzierten Kraftstoffmenge beschickt werden, d.h. "teilbefeuert" betrieben werden. So kann gemäß einer besonders bevorzugten Erfindungsvariante vorgesehen werden, der wenigstens einen befeuert betriebenen Bypass-Zylindergruppe, von der der Bypassabgasstrom abgezweigt wird, wenigstens im Bypass-Betrieb eine in einem definierten Maße größere Kraftstoffmenge zuzudosieren als der wenigstens einen restlichen Zylindergruppe. Beispielsweise könnte im Falle zweier Zylindergruppen eine Aufteilung der Kraftstoffmenge von 90% : 10% oder von 80% : 20% zugunsten einer Bypass-Zylindergruppe, um nur zwei beliebige Beispiele zu nennen, vorgesehen sein. Diese definierte Ungleichverteilung der Kraftstoffmenge zugunsten der wenigstens einen Bypass-Zylindergruppe im Bypass-Betrieb bewirkt, dass in diesem Bypass-Betrieb zum einen ein heißer Bypassabgasstrom erzeugt werden kann und zum anderen eine Abgasrückführung mit der gewünschten Gaszusammensetzung möglich ist. Weiter ist selbstverständlich auch ein Betrieb der wenigstens einen Bypass-Zylindergruppe mit einer gegenüber einem Referenz- und/oder Normalbetrieb reduzierten Kraftstoffmenge und gleichzeitig eine nicht-befeuerte Betriebsweise der wenigstens einen restlichen Zylindergruppe möglich. Die jeweiligen Betriebsweisen hängen von den jeweils konkret vorherrschenden Betriebsbedingungen ab.

Alternativ oder zusätzlich kann im Bypass-Betrieb auch eine solche Zudosierung der Kraftstoffmenge vorgesehen sein, dass der Drehmomentbeitrag der wenigstens einen Bypass-Zylindergruppe am Motordrehmoment größer ist als der der wenigstens einen restlichen Zylindergruppe. Gemäß einer besonders bevorzugten Ausgestaltung hierzu ist vorgesehen, dass der Drehmomentbeitrag der wenigstens einen Bypass-Zylindergruppe bevorzugt in etwa zwischen 70% bis 100% des Motordrehmomentes beträgt und dementsprechend der Drehmomentbeitrag der wenigstens einen restlichen Zylindergruppe dann in etwa zwischen 30% bis 0% liegt.

Mit einer derartigen erfindungsgemäßen Verfahrensführung bzw. Abgasnachbehandlungsvorrichtung kann auf bauteiltechnisch und steuerungs- bzw. regelungstechnisch einfache Weise sichergestellt werden, dass zum Beispiel im Leerlauf- bzw. im Schwachlastbetrieb der Brennkraftmaschine als definierter Bypass-Betrieb ein definierter Teilstrom des die Brennkraftmaschine verlassenden heißen Rohabgasstroms an der Abgasturbine vorbeigeleitet und somit durch diese nicht abgekühlt wird, so dass ein der Abgasturbine nachgeschaltetes Abgasnachbehandlungselement, zum Beispiel ein Katalysator oder dergleichen, auch bei derartigen Betriebszuständen schnell auf die gewünschte Temperatur, insbesondere Light-Off-Temperatur, aufgeheizt werden kann. Besonders vorteilhaft ist diese erfindungsgemäße Lösung in Verbindung mit einer selektiven katalytischen Reduktion (SCR), bei dem in der Bypassleitung wenigstens ein Hydrolysekatalysator angeordnet ist, der dadurch sehr schnell auf seine erforderliche Light-Off-Temperatur aufgeheizt werden kann, so dass die selektive katalytische Reduktion der Stickoxide in dem der Abgasturbine bzw. der Bypassleitung nachgeschalteten SCR-Katalysator auf effektive und zuverlässige sowie funktionssichere Weise durchgeführt werden kann.

Die erfindungsgemäße Lösung lässt sich insbesondere einfach und vorteilhaft in bestehende Brennkraftmaschinen-Abgasnachbehandlungskonzepte eingliedern, zum Beispiel in Verbindung mit einer optimierten Abgasrückführung und/oder in Verbindung mit einer Motorbremsklappe als Abführleitungs-Absperrelement, was nachfolgend in Verbindung mit den konkreten Ausführungsvarianten noch näher erläutert wird:
So ist gemäß einer besonders bevorzugten Ausgestaltung vorgesehen, dass das Abführleitungs-Absperrelement durch eine Motorbremsklappe gebildet ist, die im Motorbremsbetrieb bei nicht befeuert betriebener Brennkraftmaschine als Motorbremse wirkt. In diesem Fall sperrt dann das Bypass-Absperrelement bzw. die Motorbremsklappe die Bypassleitung bevorzugt im wesentlichen vollständig ab. Im befeuerten Normalbetrieb der Brennkraftmaschine kann dagegen die Motorbremsklappe in üblicher Weise offen sein und den Abgasstrom durch die Turbinen-Abführleitung freigeben. Das durch eine Motorbremsklappe gebildete Abführleitungs-Absperrelement kann somit in einer vorteilhaften Mehrfachfunktion Verwendung finden, wodurch Bauteil- und Herstellungskosten eingespart werden können. Gleichzeitig kann hierdurch der erforderliche Steuerungs- und Regelaufwand ebenfalls reduziert werden.

Gemäß einer weiteren besonders bevorzugten konkreten Ausgestaltung ist vorgesehen, dass von wenigstens einer der Rohabgasleitungen eine Abgas-Rückführleitung zu einer Ansaugluftleitung stromauf der Brennkraftmaschine geführt ist, wobei in jeder Abgas-Rückführleitung wenigstens ein Abgasrückführ-Absperrelement angeordnet ist, das mittels der oder einer Steuer- und/oder Regeleinrichtung in Abhängigkeit von definierten Betriebsparametern der Brennkraftmaschine so angesteuert wird, dass zu vorgegebenen Zeiten eine definierte Menge an Gas zu der Ansaugluftleitung rückgeführt wird. Konkret können hierbei die Abgasrückführ-Absperrelemente mehrerer Abgas-Rückführleitungen so miteinander gekoppelt bzw. ausgebildet sein, dass diese mittels der Steuer- und/oder Regeleinrichtung in Abhängigkeit von den jeweils vorgegebenen Betriebsparametern der Brennkraftmaschine entweder gemeinsam, zum Beispiel über eine gemeinsame Welle, oder aber auch separat angesteuert und betätigt werden können. Insbesondere in Verbindung mit einer Regelung bzw. Steuerung der Abgasrückführmenge kann für bestimmte nachfolgend noch näher erörterte Betriebszustände die separate Ansteuerungsmöglichkeit der Abgasrückführ-Absperrelemente vorteilhaft sein. So können die Abgasrückführ-Absperrelemente mehrerer Abgas-Rückführleitungen zum Beispiel so angesteuert und betätigt werden, dass im Bypass-Betrieb im wesentlichen lediglich das Gas von der wenigstens einen wahlweise befeuert, bevorzugt mit einer gegenüber einem definierten Normalbetrieb und/oder gegenüber der bypassseitig zudosierten Kraftstoffmenge reduzierten Kraftstoffmenge teilbefeuert, oder nicht-befeuert betriebenen, restlichen Zylindergruppe zur Ansaugluftleitung rückgeführt wird, während das Abgas aus der wenigstens einen Bypass-Zylindergruppe im wesentlichen vollständig über die Bypassleitung strömt. Dadurch können zu hohe Abgasrückführraten vermieden werden, die zu unerwünscht hohen Abgasmengen im Bereich der Ansaugluft bzw. Ladeluft führen würden. Desweiteren kann durch eine derartige Absperrung der Bypassseite in Richtung zur Ansaugluftleitung sichergestellt werden, dass ein ausreichend hoher, bevorzugt der gesamte Abgasstrom aus der wenigstens einen Bypass-Zylindergruppe im Bypass-Betrieb über die Bypassleitung strömt und dadurch die entsprechend erwünschte schnelle Aufheizung des wenigstens einen Abgasnachbehandlungselementes bewirken kann. Denn ohne eine derartige bypassseitige Absperrung bzw. Absperrmöglichkeit zur Ansaugluftseite hin bestünde die Gefahr, dass insbesondere in Verbindung mit einem in der Bypassleitung integriertem Abgasnachbehandlungselement zusätzlich zu dem Abgasnachbehandlungselement in der Turbinen-Abführleitung ein so hoher bypassleitungsseitiger Widerstand bzw. Gegendruck vorliegen würde, dass ein Großteil des aus der wenigstens einen Bypass-Zylindergruppe abströmenden Abgasstroms zur Ansaugluftleitung hin strömen würde.

Gemäß einer besonders bevorzugten konkreten Verfahrensführung und Ausgestaltung ist vorgesehen, dass die Brennkraftmaschine oder jede Zylinderbank der Brennkraftmaschine, zum Beispiel einer V-Brennkraftmaschine, zweiflutig ausgebildet ist und eine von einem ersten Rohabgasstrom einer ersten Zylindergruppe durchströmte erste Rohabgasleitung und eine von einem zweiten Rohabgasstrom einer zweiten Zylindergruppe durchströmte zweite Rohabgasleitung aufweist. Bei einem derartigen Aufbau kann besonders einfach sichergestellt werden, dass im Bypass-Betrieb das wenigstens eine Bypass-Absperrelement so angesteuert wird, dass in diesem Bypass-Betrieb ein Bypass-Abgasstrom für die Bypassleitung lediglich von dem von der ersten Zylindergruppe als Bypass-Zylindergruppe kommenden ersten Rohabgasstrom abgezweigt wird, während dann die zweite Zylindergruppe die restliche Zylindergruppe der Brennkraftmaschine im zuvor genannten Sinne ausbildet, die in Abhängigkeit von definierten Betriebsparametern der Brennkraftmaschine, insbesondere in Abhängigkeit von definierten Abgasrückführparametern und/oder Ansaugluftparametern und/oder Abgasnachbehandlungselement-Aufheizparametern, wahlweise befeuert, bevorzugt mit einer gegenüber einem definierten Normalbetrieb und/oder gegenüber der bypassseitig zudosierten Kraftstoffmenge reduzierten Kraftstoffmenge teilbefeuert, oder nicht-befeuert betrieben wird, wie dies bereits zuvor in allgemeiner Weise dargestellt und erläutert worden ist. Ein derartiger Aufbau ist herstellungstechnisch besonders einfach zu realisieren.

Gemäß einer besonders bevorzugten erfindungsgemäßen Verfahrensführung ist vorgesehen, dass die wenigstens eine Steuer- und/oder Regeleinrichtung im Bypass-Betrieb das Abführleitungs-Absperrelement, das wenigstens eine Abgasrückführ-Absperrelement und das Bypass-Absperrelement so ansteuert, dass:
- das Bypass-Absperrelement den Bypassabgasstrom durch die Bypassleitung wenigstens teilweise freigibt,
- das Abführleitungs-Absperrelement den Abgasstrom durch die Turbinen-Abführleitung wenigstens teilweise sperrt, und
- das wenigstens eine Abgasrückführ-Absperrelement die Strömungsverbindung zwischen wenigstens einer der von der wenigstens einen restlichen Zylindergruppe wegführenden Rohabgasleitung und der Ansaugluftleitung wenigstens teilweise freigibt und/oder die Strömungsverbindung zwischen wenigstens einer der von der wenigstens einen Bypass-Zylindergruppe wegführenden Rohabgasleitung und der Ansaugluftleitung wenigstens teilweise sperrt.
   Letzterer Aspekt bedeutet in Verbindung mit einer zuvor genannten, bevorzugten zweiflutigen Ausgestaltung der Brennkraftmaschine oder einer Zylinderbank der Brennkraftmaschine, dass das wenigstens eine Abgasrückführ-Absperrelement die Strömungsverbindung zwischen der von der zweiten Zylindergruppe als restlicher Zylindergruppe wegführenden ersten Rohabgasleitung und der Ansaugluftleitung wenigstens teilweise freigibt und/oder die Strömungsverbindung zwischen der von der ersten Zylindergruppe als Bypass-Zylindergruppe wegführenden ersten Rohabgasleitung und der. Ansaugluftleitung wenigstens teilweise sperrt. Dadurch kann erreicht werden, dass im Bypass-Betrieb:
- das Abgas aus der wenigstens einen befeuert betriebenen Bypass-Zylindergruppe, insbesondere aus der befeuert betriebenen ersten Zylindergruppe einer zweiflutigen Brennkraftmaschine oder Zylinderbank einer Brennkraftmaschine, in einem vorgegebenen Maße, insbesondere im Wesentlichen vollständig, als heißer Abgasstrom durch die Bypassleitung strömt, und
- das Gas aus der wenigstens einen, wahlweise befeuert, insbesondere mit einer gegenüber einem definierten Normalbetrieb und/oder gegenüber der bypassseitig zudosierten Kraftstoffmenge reduzierten Kraftstoffmenge teilbefeuert, oder nicht-befeuert betriebenen restlichen Zylindergruppe, insbesondere bei der zweiflutigen Ausgestaltung der Zylinderbank oder der Brennkraftmaschine aus der zweiten Zylindergruppe, im wesentlichen im Kreis gepumpt und zur Ansaugleitung rückgeführt wird.

Damit lassen sich folgende besonders bevorzugten unterschiedlichen Betriebsweisen realisieren, die je nach Betriebszustand bzw. Auslegung der Brennkraftmaschine eingesteuert bzw. eingeregelt werden: wird die wenigstens eine restliche bzw. zweite Zylindergruppe nicht abgeschaltet bzw. befeuert, insbesondere im zuvor genannten Sinne teilbefeuert betrieben, so ergeben sich je nach Befeuerungsgrad sehr hohe Abgasrückführraten, was wiederum sehr niedrige Stickoxidemissionen im Rohabgasstrom zur Folge hat. Dabei wird zudem sichergestellt, dass eine ausreichend hohe Menge eines heißen Abgasstroms über die Bypassleitung zur Erhitzung des wenigstens einen Abgasnachbehandlungselementes zur Verfügung steht. Andererseits kann bei gegenüber einem befeuerten Normalbetrieb lediglich minimal beschickter oder ganz abgeschalteter bzw. nicht-befeuert betriebener wenigstens einer restlichen bzw. zweiten Zylindergruppe ein höheres Temperaturniveau in der wenigstens einen Bypass-Zylindergruppe und damit für den Bypassabgasstrom erzielt werden. Bei einer derart mit einer gegenüber einem befeuerten Normalbetrieb in einem vorgegebenen Maße reduziert mit Kraftstoff beschickten bzw. nicht-befeuerten Betriebsweise kann eine noch höhere bypassseitige Temperatur insbesondere dadurch erreicht werden, dass die wenigstens eine Bypass-Zylindergruppe mit einer gegenüber einem definierten Normalbetrieb höheren Kraftstoffmenge beschickt wird. Auch hier kann dann wiederum sichergestellt werden, dass eine ausreichend hohe Menge dieses heißen Abgasstroms über die Bypassleitung abströmen kann.

Diese Betriebsweisen lassen sich daher mit relativ wenig Bauteil- und Steuerungs- bzw. Regelungsaufwand realisieren und erlauben eine optimierte Aufheizung einer Abgasnachbehandlungsvorrichtung einer mehrzylindrigen Brennkraftmaschine insbesondere im hierfür kritischen Leerlauf bzw. Schwachlastbetrieb. Dieser Schwachlastbetrieb entspricht dabei bevorzugt einem Brennkraftmaschinenbetrieb, bei dem in etwa 0 bis 60 %, bevorzugt in etwa 0 bis 50 %, der Volllast angefordert werden und/oder bei dem die Abgastemperatur in der Turbinen-Abführleitung kleiner in etwa 300°C ist.

Besonders bevorzugt ist eine auch separat und unabhängig beanspruchte Verfahrensführung, bei der die über die Bypassleitung geleitete Abgasmenge in Abhängigkeit von wenigstens einer Solltemperatur im Bypass-Abgasstrom und/oder an wenigstens einer Abgasnachbehandlungskomponente gesteuert oder geregelt wird. Damit lässt sich auf besonders einfache Weise die benötigte Abzweigmenge bestimmen, nämlich in Abhängigkeit von denjenigen Bauteilen bzw. Massenströmen, die erwärmt werden sollen, bzw. die Erwärmung bewirken sollen. Beispielsweise können hierfür geeignete Kennlinien oder Parameter in einer Steuer- und/oder Regeleinrichtung abgelegt sein.

Gemäß einem weiteren besonders vorteilhaften und separat sowie unabhängig beanspruchten Erfindungsaspekt ist die Abgasturbine mehrflutig ausgebildet, wobei für jede der Rohabgasleitungen eine Turbinenflut vorgesehen ist. Eine Rohabgasleitung bildet zusammen mit einer zugeordneten Turbinenflut jeweils eine separate Abgasflut aus, wobei die wenigstens eine Abgas-Rückführleitung und die wenigstens eine Bypassleitung von unterschiedlichen Rohabgasleitungen abzweigen dergestalt, dass wenigstens im Bypass-Betrieb eine nach Abgasfluten getrennte Entnahme von Rückführgas und Bypass-Abgasstrom erfolgen kann. Mit einer derartigen erfindungsgemäßen Maßnahme kann vorteilhaft vermieden werden, dass das Zusammenspiel im Ladungswechsel von Abgasturbolader und Abgasrückführung verändert wird, wie dies bei einer Abzweigung eines Bypassstroms von zum Beispiel einer Abgasflut und einer von allen Abgasfluten abzweigenden Abgas-Rückführleitung der Fall ist. Denn unter ungünstigen Umständen kommt es bei dieser herkömmlichen Betriebsweise bzw. Auslegung aufgrund des Zweigstroms zu unzureichenden Ladedrücken und Abgasrückführraten. Mit der erfindungsgemäßen Lösung, mit der von der Entnahme der Rückführgase von allen Abgasfluten abgerückt wird, in dem die Abgasrückführung im bevorzugt und beispielhaften Falle von zwei Abgasfluten pro Brennkraftmaschine oder pro Zylinderbank, nur noch an einer Abgasflut angeschlossen wird und der Bypass-Abgasstrom aus der anderen Abgasflut abgezogen wird, wird dies vorteilhaft vermieden.

Dabei ist weiter bevorzugt vorgesehen, dass die wenigstens eine abgasrückführseitige Abgasflut und die wenigstens eine abzweigseitige Abgasflut in vorgegebenen Bereichen, insbesondere rohabgasleitungsseitig und/oder turbinenflutseitig, hinsichtlich des Strömungsquerschnittes veränderbar ausgebildet sind oder bevorzugt dauerhaft unterschiedlich ausgebildet sind. Die veränderbare Ausbildung kann dabei zum Beispiel mittels einer Schieber- und/oder Klappenanordnung realisiert werden, die mittels einer Regel- und/oder Steuereinrichtung entsprechend vorgebbarer Parameter ansteuerbar ist. Dies ist bauteiltechnisch und fertigungstechnsich sowie auch steuerungs- und regelungstechnisch jedoch relativ aufwendig, so dass die dauerhaft unterschiedliche Ausbildung der Abgasfluten die bevorzugte Variante ist.

Mit einem derartig unterschiedlich ausgebildeten Strömungsquerschnitt kann der Abgasgegendruck in der wenigstens einen abgasrückführseitigen Abgasflut, bezogen auf den Nicht-Bypass-Betrieb bzw. Normalbetrieb, größer gestaltet werden als in der abzweigseitigen Abgasflut. Damit steigt in der engeren Abgasflut der Abgasgegendruck und bewirkt durch das größere Druckgefälle die gewünschte hohe Rückführrate, die höher liegt als dies ohne Querschnittsverengung der Fall wäre. Bevorzugt ist hierbei das Turbinehgehäuse der Abgasturbine dergestalt asymmetrisch ausgebildet, dass die erste, abgasrückführseitige Turbinenflut einen kleineren Strömungsquerschnitt bzw. Offnungsquerschnitt aufweist als die zweite, bypassseitige Turbinenflut. Die Länge des verengten Abschnittes kann dabei entsprechend der jeweils gegebenen konkreten Einbauverhältnisse individuell ausgelegt und eingestellt werden.

Um für bestimmte Betriebszustände sicherzustellen, dass zum Beispiel beim Abschalten bzw. Absperren des Bypass-Abgasstroms überhöhte Abgasdrücke vor der Abgasturbine herrschen, kann zumindest an der engeren Abgasflut eine Abblasvorrichtung und/oder eine Überströmverbindung zur anderen Abgasflut vorgesehen sein.

Mit einer derartigen nach Abgasfluten getrennten Entnahme von Rückführgas und Bypass-Abgasstrom ergeben sich gegenüber einer Variante mit symmetrischer Turbine und Abgasrückführ-Anschlüssen an beiden Abgasfluten wesentliche Verbesserungen beim Abschalten der Bypassleitung, nämlich, vor allem bei niedrigeren Motordrehzahlen, ein geringerer Kraftstoffverbrauch, eine höhere Abgasrückführrate sowie ein höheres Luft-Kraftstoffverhältnis, ebenfalls vor allem bei niedrigen Motordrehzahlen.

Die Erfindung wird nachfolgend anhand einer Zeichnung näher erläutert.

Es zeigen:
- Fig. 1: schematisch eine erfindungsgemäße Verfahrensführung bzw. Ab- gasnachbehandlungsvorrichtung gemäß einer ersten Aus- führungsform, und
- Fig. 2: schematisch eine erfindungsgemäße Verfahrensführung bzw. Abgasnachbehandlungsvorrichtung gemäß einer zweiten Ausführungsform.

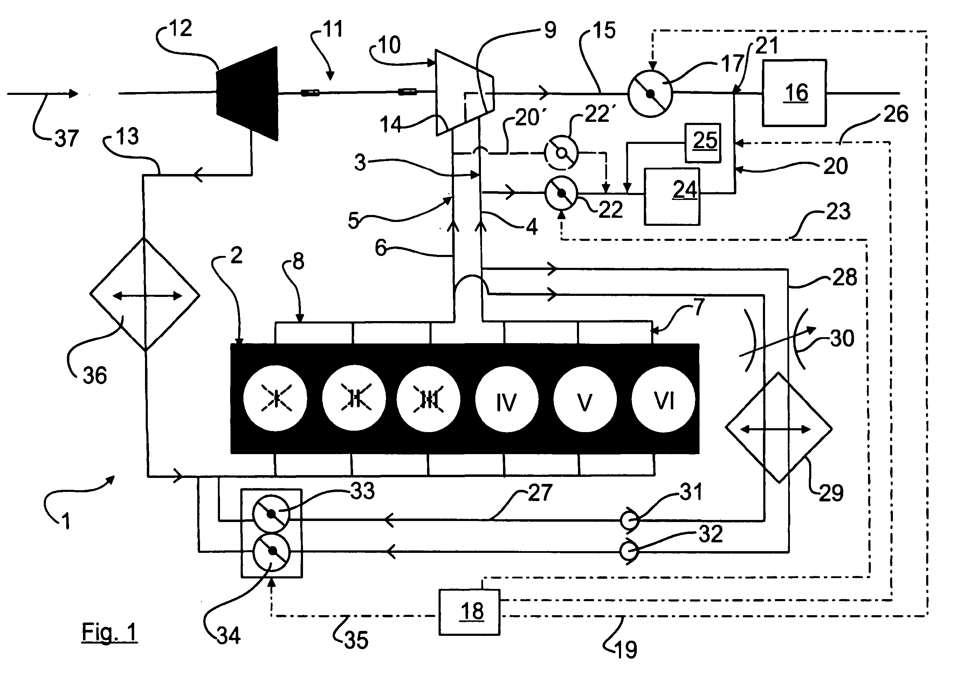

In der Fig. 1 ist schematisch eine erste Ausführungsform einer erfindungsgemäßen Abgasnachbehandlungsvorrichtung 1 für eine hier sechszylindrige Reihen-Brennkraftmaschine 2 gezeigt. Von dieser Brennkraftmaschine 2 zweigt eine erste Abgasflut 3 mittels einer Rohabgasleitung 4 und eine zweite Abgasflut 5 mit einer Rohabgasleitung 6 ab, wobei eine durch die Zylinder IV, V, VI gebildete erste Zylindergruppe 7 der Rohabgasleitung 4 zugeordnet ist, während eine durch die Zylinder I, II, III gebildete zweite Zylindergruppe 8 der zweiten Rohabgasleitung 6 zugeordnet ist.

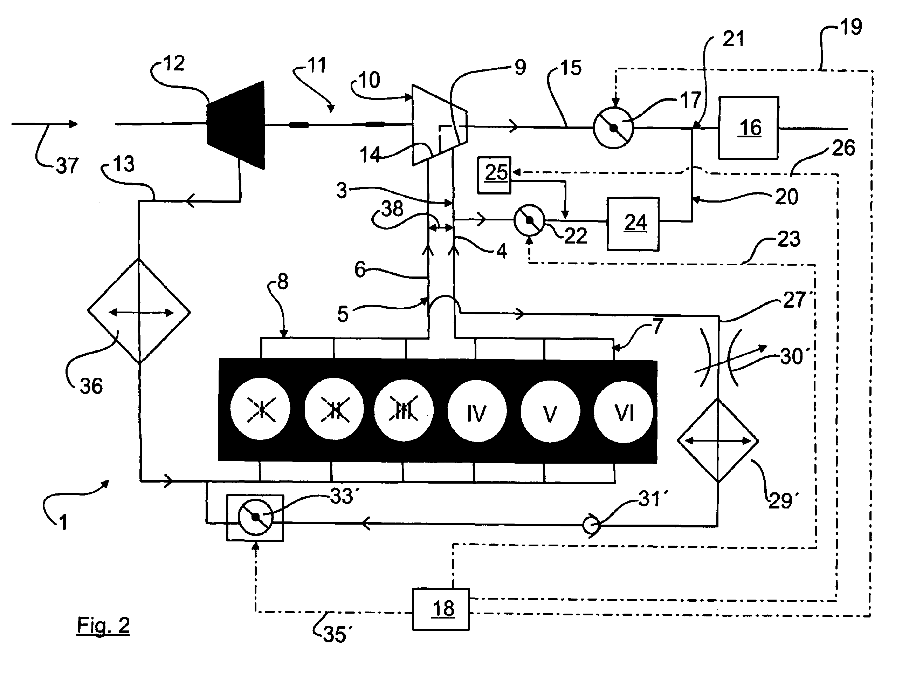

Die erste Rohabgasleitung 4 mündet in einer ersten Turbinenflut 9 einer Abgasturbine 10 eines Abgasturboladers 11, der weiter einen Luftverdichter 12 in einer Ansaugluftleitung 13 aufweist. In analoger Weise mündet die zweite Rohabgasleitung 6 in eine zweite Turbinenflut 14 der Abgasturbine 10, die auch ein nachfolgend in Verbindung mit der Ausführungsform nach Fig. 2 noch näher erläutertes asymmetrisches Turbinengehäuse aufweisen kann. Grundsätzlich kann das Turbinengehäuse der Abgasturbine 10 jedoch hier in der Ausführungsform gemäß Fig. 1 auch mit symmetrischen Turbinenfluten 9, 14 ausgebildet sein.

Von der Abgasturbine 10 führt eine Turbinen-Abführleitung 15 zu einem hier beispielhaft als SCR-Katalysator 16 ausgebildeten Abgasnachbehandlungselement, wobei, wie dies der Fig. 2 weiter zu entnehmen ist, in der Turbinen-Abführleitung 15 weiter eine Motorbremsklappe (Abführleitungs-Absperrelement 17), auch Motorstauklappe genannt, angeordnet ist, die mittels einer Steuereinrichtung 18 entsprechend vorgegebener Steuer- und/oder Regelparameter ansteuerbar bzw. regelbar ist. Sämtliche Steuerleitungen sind hier strichpunktiert eingezeichnet, um diese leichter von den gas- bzw. mediumführenden Rohrleitungen der Abgasnachbehandlungsvorrichtung 1 unterscheiden zu können. Die Steuerleitung von der Steuereinrichtung 18 zur Motorbremsklappe (Abführleitungs-Absperrelement 17) ist hier mit dem Bezugszeichen 19 bezeichnet.

Von der ersten Abgasflut 3 bzw. der ersten Rohabgasleitung 4 zweigt stromauf der Abgasturbine 10 eine Bypassleitung 20 ab, die stromab der Motorbremsklappe (Abführleitungs-Absperrelement 17) bzw. stromauf des SCR-Katalysators 16 an einer Einmündposition 21 in die Turbinen-Abführleitung 15 einmündet. In dieser Bypassleitung 20 ist ein zum Beispiel durch eine Absperrklappe gebildetes Bypass-Absperrelement 22 angeordnet, das über eine Steuerleitung 23 von der Steuereinrichtung 18 entsprechend vorgegebener Steuer- und/oder Regelparameter ansteuerbar bzw. regelbar ist. Stromab des Bypass-Absperrelementes 22 ist ein Hydrolysekatalysator 24 in der Bypassleitung 20 stromauf der Einmündposition 21 angeordnet.

Desweiteren umfasst die Abgasnachbehandlungsvorrichtung 1 eine Zumesseinrichtung 25, mittels der dem durch die Bypassleitung 20 strömenden Bypassabgasstrom stromauf des Hydrolysekatalysators 24 eine vorgegebene Menge eines Reduktionsmittels, zum Beispiel einer wässrigen Harnstofflösung, zu definierten Zeiten zugemessen wird. Die Zumessung erfolgt ebenfalls wiederum gesteuert bzw. geregelt mittels der Steuereinrichtung 18 und einer Steuerleitung 26.

An dieser Stelle sei ausdrücklich erwähnt, dass die Abzweigung der Bypassleitung 20 von der Rohabgasleitung 4 und damit von der ersten Zylindergruppe 7 hier nur beispielhaft gewählt ist. Selbstverständlich wäre auch eine spiegelbildliche Anordnung möglich, bei der z.B. die Bypassleitung 20 alternativ von der Rohabgasleitung 6 abzweigt. Diese Möglichkeit ist in der Fig. 1 strichliert durch die Bypassleitung 20' und das Bypass-Absperrelement 20 dargestellt.

Weiter zweigt hier von jeder der beiden Rohabgasleitungen 4, 6 stromauf der Abgasturbine 10 jeweils eine Abgas-Rückführleitung 27, 28 ab, die jeweils stromauf der Brennkraftmaschine 2 in die Ansaugluftleitung 13 münden. Die beiden Abgas-Rückführleitungen 27, 28 können in üblicher Weise über einen Kühler 29 geführt sein.

Ferner ist in jede der Abgas-Rückführleitungen 27, 28 optional ein Rückschlagventil 31, 32 integriert, die in üblicher Weise verhindern, dass rückgeführtes Gas bzw. Abgas zurückströmen kann. Stromab der beiden Rückschlagventile 31, 32 ist in jeder der Abgas-Rückführleitungen 27, 28 jeweils eine Absperrklappe als Abgasrückführ-Absperrelement 33, 34 angeordnet, die gemeinsam oder einzeln mittels der Steuereinrichtung 18 über die Steuerleitung 35 angesteuert bzw. geregelt werden können. Weiter kann in diese Abgas-Rückführleitungen 27, 28 ggf. auch jeweils ein hier äußerst schematisch dargestelltes Drosselelement 30 integriert sein, was aber aufgrund der Abgasrückführ-Absperrelemente 33, 34 an sich überflüssig ist, da diese neben der Absperrfunktion auch eine Drosselfunktion übernehmen können. Des Weiteren könnten die Abgasrückführ-Absperrelemente 33, 34 alternativ auch stromauf des Kühlers 29 angeordnet sein.

Weiter ist der Fig. 1 noch zu entnehmen, dass in der eine Ladeluftleitung ausbildenden Ansaugluftleitung 13 ein Ladeluftkühler 36 integriert ist, der herkömmlicher Bauart und Funktion sein kann.

Im Weiteren wird nun die Funktionsweise der erfindungsgemäßen Abgasnachbehandlungsvorrichtung 1 gemäß der Ausführungsform nach Fig. 1 näher erläutert:
Wird im Leerlaufbetrieb bzw. im Niedriglastbetrieb der Brennkraftmaschine, bei dem zum Beispiel in etwa 50 % der möglichen Volllast angefördert werden, Luft 37 angesaugt, gelangt diese über Luftverdichter 12, die Ansaugluftleitung 13 und anschließend über den Ladeluftkühler 36 zu den Zylindern I bis VI der Brennkraftmaschine, wobei dieser Ansaugluft regelmäßig eine definierte Menge an rückgeführtem Abgas aus den Abgas-Rückführleitungen 27, 28 zugegeben wird, was nachfolgend noch näher beschrieben wird.

Um im genannten Leerlaufbetrieb bzw. Schwachlastbetrieb, der hier als Bypass-Betrieb bezeichnet wird, die gewünschten hohen Temperaturen im Abgasstrom schnellstmöglich zur Verfügung stellen zu können, um sowohl den Hydrolysekatalysator 24 als auch den SCR-Katalysator 16 auf Betriebstemperatur zu erhitzen, wird von der Steuereinrichtung 18 die Motorbremsklappe (Abführleitungs-Absperrelement 17) angesteuert und bevorzugt vollständig geschlossen, so dass kein Abgasstrom über die Turbinen-Abführleitung 15 zum SCR-Katalysator 16 strömen kann. Gleichzeitig öffnet die Steuereinrichtung 18 das Bypass-Absperrelement 22, so dass der heiße Abgasstrom aus der ersten Zylindergruppe 7 über die erste Rohabgasleitung 4 in die Bypassleitung 20 einströmen kann und dort den Hydrolysekatalysator 24 durchströmt, wodurch dieser sehr schnell auf die erforderliche Betriebstemperatur aufgeheizt wird. Von dieser Bypassleitung 20 strömt der heiße Bypass-Abgasstrom dann weiter in die Turbinen-Abführleitung 15 und weiter zum SCR-Katalysator 16, wodurch auch der SCR-Katalysator 16 schnell aufgeheizt werden kann.

In diesem Bypass-Betrieb steuert die Steuereinrichtung 18 ferner die beiden Abgasrückführ-Absperrelemente 33, 34 an, und zwar dergestalt, dass das Abgasrückführ-Absperrelement 33 geöffnet ist, während das Abgasrückführ-Absperrelement 34 geschlossen wird. Dadurch wird sichergestellt, dass das Gas aus der zweiten Zylindergruppe 8, die je nach Betriebsweise befeuert oder nicht-befeuert betrieben wird, was in der Fig. 1 durch die strichliert durchgestrichenen Zylinder I bis III dargestellt ist, im wesentlichen im Kreis gepumpt wird und im wesentlichen vollständig zur Ansaugluftleitung 13 rückgeführt wird. Durch das Schließen des Abgasrückführ-Absperrelementes 34 wird dagegen sichergestellt, dass im wesentlichen die gesamte Abgasmenge der befeuert betriebenen ersten Zylindergruppe 7 über die Bypassleitung 20 strömen kann.

Es ist sehr gut ersichtlich, dass durch einfache Steuerung bzw. Regelung des Offnungs- bzw. Schließzustandes des Abgasrückführ-Absperrelementes 34 die Menge des über die Abgas-Rückführleitung 28 rückgeführten Abgases eingestellt bzw. reguliert werden kann und damit auch die über die Bypassleitung 20 strömende heiße Abgasmenge. Die Regelung des Öffnungs- bzw. Schließzustandes des Abgasrückführ-Absperrelementes 34 kann dabei zum Beispiel mittels der Steuereinrichtung 18, die dann als Regeleinrichtung fungiert, in Abhängigkeit von zum Beispiel wenigstens einer Solltemperatur des Bypass-Abgasstroms und/oder einer Solltemperatur des Hydrolysekatalysators 24 und/oder des SCR-Katalysators 16 vorgenommen werden.

Wird das Abgasrückführ-Absperrelement 34 wenigstens teilweise geöffnet und werden die Zylinder I bis III der zweiten Zylindergruppe 8 befeuert betrieben, insbesondere mit einer gegenüber einem definierten Normalbetrieb der Brennkraftmaschine 2 und/oder gegenüber einer bypassseitig zudosierten Kraftstoffmenge reduzierten Kraftstoffmenge teilbefeuert betrieben, so ergeben sich dadurch sehr hohe Abgasrückführraten von mehr als der Hälfte des Abgasstroms, was sich für bestimmte Betriebszustände dann positiv auf die Stickoxidreduzierung auswirkt. Im nicht-befeuerten Betrieb der zweiten Zylindergruppe 8 wird dagegen im wesentlichen Luft umgepumpt. Sowohl im ersten als auch im letztgenannten Fall kann durch eine gleichzeitig erhöhte Kraftstoffzudosierung in die erste Zylindergruppe 7 die Verbrennungstemperatur in dieser erhöht werden, so dass dann ein noch heißerer Abgasstrom über die Bypassleitung 20 zum Hydrolysekatalysator 24 und schließlich weiter zum SCR-Katalysator 16 strömen kann.

Im Normalbetrieb, das heißt im Nicht-Bypass-Betrieb kann dann von der Steuereinrichtung 18 das Bypass-Absperrelement 22 wieder geschlossen werden, die Motorbremsklappe (Abführleitungs-Absperrelement 17) wieder geöffnet werden und auch die Abgasrückführ-Absperrelemente 33, 34 wieder in eine gewünschte, zum Beispiel teiloffene Position überführt werden, so dass über die beiden Rohabgasleitungen 4, 6 eine im wesentlichen gleiche Abgasmenge zu den beiden Turbinenfluten 9, 14 und von dort aus weiter über die Turbinen-Abführleitung 15 zum SCR-Katalysator 16 strömt.

Wie dies aufgrund der Verfahrensführung bzw. der Ausgestaltung der Abgasnachbehandlungsvorrichtung 1 ersichtlich ist, erfolgt die Zudosierung des Reduktionsmittels über die Zumesseinrichtung 25 hier dann bevorzugt zu den Zeitpunkten, in dem ein Bypass-Abgasstrom über die Bypassleitung 20 strömt. Grundsätzlich besteht auch die Möglichkeit, das Bypass-Absperrelement 22 auch im sogenannten Normalbetrieb, das heißt im Nicht-Bypass-Betrieb bzw. im Nicht-Leerlauf- oder Nicht-Schwachlastbetrieb wenigstens zweitweise zu öffnen, um zum Beispiel in den Phasen, in denen ein Reduktionsmittelzudosiert werden soll, einen Bypass-Abgasstrom über den Hydrolysekatalysator zum SCR-Katalysator 16 leiten zu können.

In der Fig. 2 ist eine alternative Ausführungsform der erfindungsgemäßen Abgasnachbehandlungsvorrichtung 1 gezeigt, die soweit nicht anders beschrieben, gleicher Bauart wie die Ausführungsform nach Fig. 1 ist. Im Unterschied zur Ausgestaltung nach Fig. 1 ist hier lediglich eine einzige Abgas-Rückführleitung 27' vorgesehen, die von der zweiten Rohabgasleitung 6 und damit von der zweiten Abgasflut 5 abzweigt. Die Bypassleitung 20 zweigt hier ausschließlich von der ersten Rohabgasleitung 4 und damit von der ersten Abgasflut 3 ab.

In der Abgas-Rückführleitung 27 ist optional ein Drosselelement 30', ein Kühler 29' und/oder ein Rückschlagventil 31' angeordnet. Stromab des Rückschlagventils 31' ist ein Abgasrückführ-Absperrelement 33' vorgesehen, das mittels einer Steuerleitung 35' von der Steuereinrichtung 18 ansteuerbar bzw. regelbar ist.

Die beiden Rohabgasleitungen 4, 6 münden hier wieder in die beiden jeweils zugeordneten Turbinenfluten 9, 14, die hier allerdings, wie bereits in Verbindung mit der Ausführungsform nach Fig. 1 angedeutet, asymmetrisch ausgelegt sind, und zwar dergestalt, dass die zweite Turbinenflut 14 einen kleineren Strömungsquerschnitt aufweist als die erste Turbinenflut 9, so dass der Abgasgegendruck auf der Seite der zweiten Abgasflut 5 höher ist als derjenige auf der Seite der ersten Abgasflut 3, was zu höheren Rückführraten des Abgases über die Abgas-Rückführleitung 27' führt. Gleichzeitig kann, zum Beispiel im abgeschalteten, nicht-befeuerten Betrieb der Zylinder I bis III der zweiten Zylindergruppe 8 dann in einem Bypass-Betrieb, analog zu vorher, ein sehr heißer Bypass-Abgasstrom über die Bypassleitung 20 geführt werden. Die Verfahrensführung und Ansteuerung der jeweiligen Absperrelemente erfolgt hier analog zu der vorhin in Verbindung mit der Fig. 1 geschilderten Art und Weise. Somit können hier durch einfache asymmetrische Gestaltung der beiden Turbinenfluten 9, 14, durch zudem einfache Verrohrung und damit Bauteilreduzierung zum einen hohe Abgasrückführraten, wenigstens im Bypass-Betrieb, als auch heiße Teilströme unter Überbrückung der Abgasturbine 10 zur Aufheizung der beiden Katalysatoren 24 und 16 erzeugt werden.

Wie dies in der Fig. 2 weiter lediglich äußerst schematisch durch den Doppelpfeil 38 dargestellt ist, kann insbesondere im Bereich der engeren, zweiten Turbinenflut 14 eine Überströmverbindung oder ein Abblaseventil vorgesehen sein, mittels dem bei zu hohen Abgasgegendrücken ein Überströmen bzw. Abblasen des Überdruckabgases ermöglicht werden kann.

Des Weiteren kann in beiden Ausführungsvarianten im Bypass-Betrieb zu definierten Zeiten eine solche befeuerte Betriebsweise gewählt werden, bei der die Zylinder IV bis VI der ersten Zylindergruppe 7 mit einer definiert größeren Kraftstoffmenge beschickt werden als die ebenfalls befeuert betriebenen Zylinder I bis III der zweiten Zylindergruppe 8. Z.B. können die Zylinder IV bis VI der ersten Zylindergruppe 7 mit einer Kraftstoffmenge von 60% bis im wesentlichen fast 100% der gesamten zu diesem Zeitpunkt zur Verfügung gestellten Kraftstoffmenge beschickt werden, während der Rest in die Zylinder I bis III der zweiten Zylindergruppe 8 eingespritzt wird.

## Patentansprüche

1. Verfahren zur Nachbehandlung eines Abgasstroms einer mehrzylindrigen Brennkraftmaschine eines Fahrzeuges, insbesondere eines Nutzfahrzeuges, mit einem mehrflutig von der Brennkraftmaschine (2) abzweigenden Abgasstrang, der mehrere von jeweils einem Rohabgasstrom durchströmte und jeweils unterschiedlichen Gruppen (7, 8) von Zylindern der Brennkraftmaschine (2) zugeordnete Rohabgasleitungen (4, 6) aufweist, wobei in einem in Abhängigkeit von definierten Betriebsparametern der Brennkraftmaschine (2) vorgegebenen Bypass-Betrieb der Brennkraftmaschine (2), insbesondere im Leerlauf- oder Schwachlastbetrieb der Brennkraftmaschine (2), eine vorgegebene Menge eines Bypassabgasstroms mittels wenigstens einer Bypassleitung (20) von lediglich einem Rohabgasstrom oder von lediglich einem Teil der Rohabgasströme der Rohabgasleitungen (4, 6) aus wenigstens einer, im Bypass-Betrieb eine Bypass-Zylindergruppe (7) ausbildenden Gruppe von befeuert betriebenen Zylindern abgezweigt und an einer Abgasturbine (10) eines Abgasturboladers (11) vorbei in Richtung zu einem der Abgasturbine (10) nachgeschalteten Abgasnachbehandlungselement (16) geführt wird, und wobei in diesem Bypass-Betrieb weiter vorgesehen ist, dass die wenigstens eine restliche Zylindergruppe (8) der Brennkraftmaschine (2), von deren Rohabgasstrom der Bypassabgasstrom nicht abgezweigt wird, in Abhängigkeit von definierten Betriebsparametern der Brennkraftmaschine (2), insbesondere in Abhängigkeit von definierten Abgasrückführparametern und/oder Ansaugluftparametern und/oder Abgasnachbehandlungselement-Aufheizparametern, wahlweise befeuert, insbesondere mit einer gegenüber einem definierten Normalbetrieb der Brennkraftmaschine (2) und/oder gegenüber einer in die wenigstens eine Bypass-Zylindergruppe (7) zudosierten Kraftstoffmenge reduzierten Kraftstoffmenge teilbefeuert, oder nicht-befeuert betrieben wird und wobei von wenigstens einer der Rohabgasleitungen (4, 6) eine Abgas-Rückführleitung (27, 28) zu einer Ansaugluftleitung (13) stromauf der Brennkraftmaschine (2) geführt ist, wobei in jeder Abgas-Rückführleitung (27, 28) wenigstens ein Abgasrückführ-Absperrelement (33, 34) angeordnet ist, das mittels einer Steuer- und Regeleinrichtung (18) in Abhängigkeit von definierten Betriebsparametern der Brennkraftmaschine (2) so angesteuert wird, dass zu vorgegebenen Zeiten eine definierte Menge an Gas zu der Ansaugluftleitung (13) rückgeführt wird, wobei bevorzugt vorgesehen ist, dass die Abgasrückführ-Absperrelemente (33, 34) mehrerer Abgas-Rückführleitungen (27, 28) so miteinander gekoppelt und/oder ausgebildet sind, dass diese mittels der Steuer- und/oder Regeleinrichtung (18) in Abhängigkeit von vorgegebenen Betriebsparametern der Brennkraftmaschine (2) gemeinsam und/oder separat angesteuert und betätigt werden und wobei die Steuer- und/oder Regeleinrichtung (18) im Bypass-Betrieb ein in einer Turbinen-Abführleitung (15) angeordnetes Abführleitungs-Absperrelement (17), das wenigstens eine Abgasrückführ-Absperrelement (33, 34) und ein in der bzw. jeder Bypassleitung (20) angeordnetes Bypass-Absperrelement (22) so ansteuert, dass:
- das Bypass-Absperrelement (22) den Bypassabgasstrom durch die Bypassleitung (20) wenigstens teilweise freigibt,
- das Abführleitungs-Absperrelement (17) den Abgasstrom durch die Turbinen-Abführleitung (15) wenigstens teilweise sperrt, und
- das wenigstens eine Abgasrückführ-Absperrelement (33, 34) die Strömungsverbindung zwischen wenigstens einer der von der wenigstens einen restlichen Zylindergruppe (8) wegführenden Rohabgasleitung (6) und der Ansaugluftleitung (13) wenigstens teilweise freigibt und/oder die Strömungsverbindung zwischen wenigstens einer der von der wenigstens einen Bypass-Zylindergruppe (7) wegführenden Rohabgasleitung (4) und der Ansaugluftleitung (13) wenigstens teilweise sperrt,
so dass im Bypass-Betrieb:
- das Abgas aus der wenigstens einen befeuert betriebenen Bypass-Zylindergruppe (7) in einem vorgegebenen Maße, insbesondere im Wesentlichen vollständig, als heißer Abgasstrom durch die Bypassleitung (20) strömt, und
- das Gas aus der wenigstens einen, wahlweise befeuert, insbesondere mit einer gegenüber einem definierten Normalbetrieb und/oder gegenüber der bypassseitig zudosierten Kraftstoffmenge reduzierten Kraftstoffmenge teilbefeuert, oder nicht-befeuert betriebenen restlichen Zylindergruppe (8) im Wesentlichen im Kreis gepumpt und zur Ansaugluftleitung (13) rückgeführt wird.

2. Verfahren nach Anspruch 1, **dadurch gekennzeichnet, dass** in der von der Abgasturbine (10) zu dem Abgasnachbehandlungselement (16) geführten Turbinen-Abführleitung (15) das durch eine Motorbremsklappe gebildete Abführleitungs-Absperrelement (17) angeordnet ist, die im Motorbremsbetrieb bei nicht befeuert betriebener Brennkraftmaschine (2) als Motorbremse wirkt, in welchem Fall kein Bypassabgasstrom über die Bypassleitung (20) abgezogen wird, und dass die Motorbremsklappe im befeuerten Normalbetrieb der Brennkraftmaschine (2) offen ist und den Abgasstrom durch die Turbinen-Abführleitung (15) freigibt.

3. Verfahren nach Anspruch 1, **dadurch gekennzeichnet, dass** die Abgasrückführ-Absperrelemente (33, 34) mehrerer Abgas-Rückführleitungen (27, 28) im Bypass-Betrieb so angesteuert und betätigt werden, dass im Wesentlichen lediglich das Gas von der wenigstens einen wahlweise befeuert oder nicht-befeuert betriebenen, restlichen Zylindergruppe (8) zur Ansaugluftleitung rückgeführt wird, und das Abgas aus der wenigstens einen Bypass-Zylindergruppe (7) in einem vorgegebenen Maße, bevorzugt im wesentlichen vollständig, als Bypassabgasstrom über die Bypassleitung (20) strömt.

4. Verfahren nach einem der Ansprüche 1 bis 3, **dadurch gekennzeichnet, dass** im Bypass-Betrieb der wenigstens einen befeuert betriebenen Bypass-Zylindergruppe (7) eine in einem definierten Maße größere Kraftstoffmenge zudosiert wird als der wenigstens einen restlichen Zylindergruppe (8), wobei die Mengendifferenz bevorzugt so vorgegeben ist, dass in die wenigstens eine restliche Zylindergruppe (8) maximal die Hälfte der in die wenigstens eine Bypass-Zylindergruppe (7) zudosierten Kraftstoffmenge zudosiert wird.

5. Verfahren nach einem der Ansprüche 1 bis 4, **dadurch gekennzeichnet, dass** die Brennkraftmaschine (2) oder jede Zylinderbank der Brennkraftmaschine zweiflutig ausgebildet ist und eine von einem ersten Rohabgasstrom einer ersten Zylindergruppe (7) durchströmte erste Rohabgasleitung (4) und eine von einem zweiten Rohabgasstrom einer zweiten Zylindergruppe (8) durchströmte zweite Rohabgasleitung (6) aufweist, dergestalt, dass der Bypassabgasstrom lediglich von dem von der ersten Zylindergruppe (7) als befeuert betriebener Bypass-Zylindergruppe kommenden ersten Rohabgasstrom abgezweigt und als heißer Bypassabgasstrom an der Abgasturbine (10) vorbei zu dem Abführleitungs-Abgasnachbehandlungselement (16) geleitet wird, und dass in diesem Bypass-Betrieb weiter vorgesehen ist, dass die zweite Zylindergruppe (8) als restliche Zylindergruppe der Brennkraftmaschine (2) in Abhängigkeit von definierten Betriebsparametern der Brennkraftmaschine (2), insbesondere in Abhängigkeit von definierten Abgasrückführparametern und/oder Ansaugluftparametern und/oder Abgasnachbehandlungselement-Aufheizparametern, wahlweise befeuert, insbesondere mit einer gegenüber einem definierten Normalbetrieb und/oder gegenüber der in die wenigstens eine Bypass-Zylindergruppe (7) zudosierten Kraftstoffmenge reduzierten Kraftstoffmenge teilbefeuert, oder nicht-befeuert betrieben wird.

6. Verfahren nach Anspruch 5, **dadurch gekennzeichnet, dass** die wenigstens eine Steuer- und/oder Regeleinrichtung (18) im Bypass-Betrieb das Abführleitungs-Absperrelement (17), das wenigstens eine Abgasrückführ-Absperrelement (33, 34) und das Bypass-Absperrelement (22) so ansteuert, dass:
- das Bypass-Absperrelement (22) den Bypassabgasstrom durch die Bypassleitung (20) wenigstens teilweise freigibt,
- das Abführleitungs-Absperrelement (17) den Abgasstrom durch die Turbinen-Abführleitung (15) wenigstens teilweise sperrt, und
- das wenigstens eine Abgasrückführ-Absperrelement (33, 34) die Strömungsverbindung zwischen der von der zweiten Zylindergruppe (8) als restlicher Zylindergruppe wegführenden zweiten Rohabgasleitung (6) und der Ansaugluftleitung (13) wenigstens teilweise freigibt und/oder die Strömungsverbindung zwischen der von der ersten Zylindergruppe (7) als Bypass-Zylindergruppe wegführenden ersten Rohabgasleitung (4) und der Ansaugluftleitung (13) wenigstens teilweise sperrt,
so dass im Bypass-Betrieb:
- das Abgas aus der befeuert betriebenen ersten Zylindergruppe (7) in einem vorgegebenen Maße, insbesondere im wesentlichen vollständig, als heißer Abgasstrom durch die Bypassleitung (20) strömt, und
- das Gas aus der wahlweise befeuert, insbesondere mit einer gegenüber einem definierten Normalbetrieb und/oder gegenüber der in die wenigstens eine Bypass-Zylindergruppe (7) zudosierten Kraftstoffmenge reduzierten Kraftstoffmenge teilbefeuert, oder nicht-befeuert betriebenen zweiten Zylindergruppe (8) im Wesentlichen im Kreis gepumpt und zur Ansaugluftleitung (13) rückgeführt wird.

7. Verfahren nach Anspruch 5 oder Anspruch 6, **dadurch gekennzeichnet, dass** im Bypass-Betrieb im Falle wenigstens einer mit einer gegenüber einem definierten Normalbetrieb reduzierten Kraftstoffmenge teilbefeuert betriebenen oder nicht-befeuert betriebenen restlichen Zylindergruppe (8) eine gegenüber einem definierten Normalbetrieb der Brennkraftmaschine (2) höhere Kraftstoffmenge in wenigstens eine befeuert betriebene Bypass-Zylindergruppe (7) zudosiert wird.

8. Abgasnachbehandlungsvorrichtung zur Durchführung eines Verfahrens nach einem der vorhergehenden Verfahrensansprüche, mit einem mehrflutig von der Brennkraftmaschine (2) abzweigenden Abgasstrang, der mehrere von jeweils einem Rohabgasstrom durchströmte und jeweils unterschiedlichen Gruppen (7, 8) von Zylindern der Brennkraftmaschine (2) zugeordnete Rohabgasleitungen (4, 6) aufweist, mit wenigstens einer, mittels wenigstens eines Bypass-Absperrelementes (22) absperrbaren und/oder gegebenenfalls wenigstens ein Bypassleitungs-Abgasnachbehandlungselement (24), insbesondere einen Hydrolysekatalysator, aufweisenden, Bypassleitung (20), die stromauf einer Abgasturbine (10) eines Abgasturboladers (11) von wenigstens einer, bevorzugt von lediglich einem Teil, der zur Abgasturbine (10) geführten Rohabgasleitungen (4, 6) abzweigt und die stromab der Abgasturbine (10) an einer Einmündposition (21) in eine von der Abgasturbine (10) abgehende Turbinen-Abführleitung (15) einmündet, wobei der Abgasturbine (10) stromab der Einmündstelle (21) der Bypassleitung (20) wenigstens ein Abführleitungs-Abgasnachbehandlungselement (16), bevorzugt ein SCR-Katalysator, nachgeschaltet ist, mit wenigstens einer Steuer- und/oder Regeleinrichtung (18), mittels der in einem in Abhängigkeit von definierten Betriebsparametern der Brennkraftmaschine (2) vorgegebenen Bypass-Betrieb der Brennkraftmaschine (2), insbesondere im Leerlauf oder Schwachlastbetrieb der Brennkraftmaschine (2), eine vorgegebene Menge eines über die wenigstens eine Bypassleitung (20) strömenden Bypassabgasstroms von lediglich einem Rohabgasstrom oder von lediglich einem Teil der Rohabgasströme der Rohabgasleitungen (4, 6) aus wenigstens einer, im Bypass-Betrieb eine Bypass-Zylindergruppe (7) ausbildenden Gruppe von befeuert betriebenen Zylindern abzweigbar ist und wobei in der Turbinen-Abführleitung (15) wenigstens ein bevorzugt durch eine Motorbremsklappe gebildetes Abführleitungs-Absperrelement (17) angeordnet ist, das mit der Steuer- und/oder Regeleinrichtung (18) so gekoppelt ist, dass es im Bypass-Betrieb wenigstens teilweise absperrbar ist, so dass eine vorgegebene Menge eines heißen Bypassabgasstroms an der Abgasturbine (10) vorbei in Richtung Turbinen-Abführleitung (15) strömt, und dass von wenigstens einer der Rohabgasleitungen (4, 6), bevorzugt von wenigstens einer solchen Rohabgasleitung (6), von der die Bypassleitung (20) nicht abzweigt, eine Abgas-Rückführleitung (27, 28) zu einer Ansaugluftleitung (13) stromauf der Brennkraftmaschine (2) geführt ist, wobei in jeder Abgas-Rückführleitung (27, 28) wenigstens ein Abgasrückführ-Absperrelement (33, 34) angeordnet ist.

9. Abgasnachbehandlungsvorrichtung nach Anspruch 8, **dadurch gekennzeichnet, dass** die Brennkraftmaschine (2) oder jede Zylinderbank der Brennkraftmaschirie (2) zweiflutig ausgebildet ist und eine von einem ersten Rohabgasstrom einer ersten Zylindergruppe (7) durchströmte erste Rohabgasleitung (4) und eine von einem zweiten Rohabgasstrom einer zweiten Zylindergruppe (8) durchströmte zweite Rohabgasleitung (6) aufweist, wobei bevorzugt vorgesehen ist, dass die mittels wenigstens eines Bypass-Absperrelementes (22) absperrbare Bypassleitung (20) von lediglich einer der beiden Rohabgasleitungen (4, 6) abgezweigt ist, insbesondere von einer solchen Rohabgasleitung (4) abgezweigt ist, die im Bypass-Betrieb einer Bypass-Zylindergruppe (7) zugeordnet ist.

10. Abgasnachbehandlungsvorrichtung nach einem der Ansprüche 8 oder 10, **dadurch gekennzeichnet, dass** die Abgasturbine (10) mehrflutig ausgebildet ist und für jede der Rohabgasleitungen (4, 6) eine Turbinenflut (9, 14) aufweist, wobei eine Rohabgasleitung (4, 6) zusammen mit einer zugeordneten Turbinenflut (9, 14) jeweils eine separate Abgasflut (3, 5) ausbildet, wobei bevorzugt vorgesehen ist, dass die wenigstens eine Abgas-Rückführleitung (27') und die wenigstens eine Bypassleitung (20) von unterschiedlichen Rohabgasleitungen (4, 6) abzweigen dergestalt, dass wenigstens im Bypass-Betrieb eine nach Abgasfluten (3, 5) getrennte Entnahme von Rückführgas und Bypassabgasstrom durchführbar ist.

11. Abgasnachbehandlungsvorrichtung nach Anspruch 10, **dadurch gekennzeichnet, dass** die wenigstens eine abgasrückführseitige Abgasflut (5) und die wenigstens eine bypassseitige Abgasflut (3) in vorgegebenen Bereichen, insbesondere rohabgasleitungsseitig und/oder turbinenflutseitig, hinsichtlich des Strömungsquerschnittes mittels einer Schieber- und/oder Klappenanordnung veränderbar ausgebildet ist oder dauerhaft unterschiedlich ausgebildet ist, wobei der Strömungsquerschnitt bevorzugt so unterschiedlich ausgebildet oder so veränderbar ist, dass der Abgasgegendruck in der wenigstens einen abgasrückführseitigen Abgasflut (5), bezogen auf den Normalbetrieb oder Nicht-Bypass-Betrieb der Brennkraftmaschine, größer ist als in der bypassseitigen Abgasflut (3).

12. Abgasnachbehandlungsvorrichtung nach Anspruch 10 oder 11, **dadurch gekennzeichnet, dass** eine Abgas-Rückführleitung (27') vorgesehen ist, die stromauf der Abgasturbine (10) von einer einer zweiten Turbinenflut (14) zugeordneten zweiten Rohabgasleitung (6) abzweigt und zu einer Ansaugluftleitung (13) stromauf der Brennkraftmaschine (2) geführt ist, und dass die Bypassleitung (20) von einer einer ersten Turbinenflut (3) zugeordneten ersten Rohabgasleitung (4) abzweigt, wobei bevorzugt vorgesehen ist, dass ein Turbinengehäuse der Abgasturbine (10) dergestalt asymmetrisch ausgebildet ist, dass die abgasrückführseitige, zweite Turbinenflut (5) einen kleineren Strömungsquerschnitt und/oder Öffnungsquerschnitt aufweist als die bypassseitige, erste Turbinenflut (3).

## Claims

1. Method for the aftertreatment of an exhaust-gas flow of a multi-cylinder internal combustion engine of a vehicle, in particular of a utility vehicle, having an exhaust tract which branches off in multi-channel form from the internal combustion engine (2) and which has a plurality of untreated exhaust-gas lines (4, 6) through which in each case one untreated exhaust-gas flow passes and which are assigned in each case to different groups (7, 8) of cylinders of the internal combustion engine (2), wherein in a bypass operating mode of the internal combustion engine (2), which is predefined as a function of defined operating parameters of the internal combustion engine (2), in particular in the idle or low-load operating mode of the internal combustion engine (2), a predefined quantity of a bypass exhaust-gas flow is branched off by means of at least one bypass line (20) from only one untreated exhaust-gas flow or from only some of the untreated exhaust-gas flows of the untreated exhaust-gas lines (4, 6) from at least one group of cylinders operated in a fired operating mode, said group forming a bypass cylinder group (7) in the bypass operating mode, and is conducted past an exhaust-gas turbine (10) of an exhaust-gas turbocharger (11) in the direction of an exhaust-gas aftertreatment element (16) connected downstream of the exhaust-gas turbine (10), and wherein in said bypass operating mode it is also provided that the at least one remaining cylinder group (8) of the internal combustion engine (2), from the untreated exhaust-gas flow of which the bypass exhaust-gas flow is not branched off, is operated selectively in a fired operating mode, in particular in a partially fired operating mode with a reduced fuel quantity in relation to a defined normal operating mode of the internal combustion engine (2) and/or in relation to a fuel quantity dosed into the at least one bypass cylinder group (7), or in a non-fired operating mode, as a function of defined operating parameters of the internal combustion engine (2), in particular as a function of defined exhaust-gas recirculation parameters and/or intake air parameters and/or exhaust-gas aftertreatment element heating parameters, and wherein an exhaust-gas recirculation line (27, 28) leads from at least one of the untreated exhaust-gas lines (4, 6) to an intake air line (13) upstream of the internal combustion engine (2), wherein in each exhaust-gas recirculation line (27, 28) there is arranged at least one exhaust-gas recirculation shut-off element (33, 34) which is activated by means of a control and regulating device (18) as a function of defined operating parameters of the internal combustion engine (2) such that a defined quantity of gas is recirculated to the intake air line (13) at predefined times, wherein it is preferably provided that the exhaust-gas recirculation shut-off elements (33, 34) of a plurality of exhaust-gas recirculation lines (27, 28) are coupled to one another and/or designed so as to be activated and actuated jointly and/or separately by means of the control and/or regulating device (18) as a function of predefined operating parameters of the internal combustion engine (2), and wherein the control and/or regulating device (18) activates a discharge line shut-off element (17) arranged in a turbine discharge line (15), the at least one exhaust-gas recirculation shut-off element (33, 34), and a bypass shut-off element (22) arranged in the or each bypass line (20) in such a way that:
- the bypass shut-off element (22) at least partially permits the bypass exhaust-gas flow through the bypass line (20),
- the discharge line shut-off element (17) at least partially blocks the exhaust-gas flow through the turbine discharge line (15), and
- the at least one exhaust-gas recirculation shut-off element (33, 34) at least partially opens up the flow connection between at least one untreated exhaust-gas line (6) leading away from the at least one remaining cylinder group (8) and the intake air line (13), and/or at least partially blocks the flow connection between at least one untreated exhaust line (4) leading away from the at least one bypass cylinder group (7) and the intake air line (13),
such that in the bypass operating mode:
- the exhaust gas from the at least one bypass cylinder group (7) operated in a fired operating mode flows to a predefined extent, in particular substantially entirely, as a hot exhaust-gas flow through the bypass line (20), and
- the gas from the at least one remaining cylinder group (8), which is operated selectively in a fired operating mode, in particular in a partially fired operating mode with a reduced fuel quantity in relation to a defined normal operating mode and/or in relation to the fuel quantity dosed at the bypass side, or in a non-fired operating mode, is pumped substantially in a circuit and recirculated to the intake air line (13).

2. Method according to Claim 1, **characterized in that** the turbine discharge line (15) which leads from the exhaust-gas turbine (10) to the exhaust-gas aftertreatment element (16) has arranged in it the discharge line shut-off element (17) which is formed by an engine braking flap and which, in the engine braking operating mode when the internal combustion engine (2) is operated in the non-fired operating mode, acts as an engine brake, in which case no bypass exhaust-gas flow is drawn off via the bypass line (20), and **in that** the engine braking flap is open, and permits the exhaust-gas flow through the turbine discharge line (15), in the fired normal operating mode of the internal combustion engine (2).

3. Method according to Claim 1, **characterized in that**, in the bypass operating mode, the exhaust-gas recirculation shut-off elements (33, 34) of a plurality of exhaust-gas recirculation lines (27, 28) are activated and actuated such that substantially only the gas from the at least one remaining cylinder group (8), which is operated selectively in a fired operating mode or in a non-fired operating mode, is recirculated to the intake air line, and the exhaust gas from the at least one bypass cylinder group (7) flows to a predefined extent, preferably substantially entirely, as a bypass exhaust-gas flow via the bypass line (20).

4. Method according to one of Claims 1 to 3, **characterized in that**, in the bypass operating mode of the at least one bypass cylinder group (7) operated in a fired operating mode, a fuel quantity is dosed which is greater to a defined extent than the at least one remaining cylinder group (8), wherein the quantity difference is preferably predefined such that at a maximum half of the fuel quantity dosed into the at least one bypass cylinder group (7) is dosed into the at least one remaining cylinder group (8).

5. Method according to one of Claims 1 to 4, **characterized in that** the internal combustion engine (2) or each cylinder bank of the internal combustion engine is of two-channel design and has a first untreated exhaust-gas line (4), through which a first untreated exhaust-gas flow of a first cylinder group (7) flows, and a second untreated exhaust-gas line (6), through which a second untreated exhaust-gas flow of a second cylinder group (8) flows, such that the bypass exhaust-gas flow is branched off only from the first untreated exhaust-gas flow originating from the first cylinder group (7) as the bypass cylinder group operated in a fired operating mode and is conducted as a hot bypass exhaust-gas flow past the exhaust-gas turbine (10) to the discharge line exhaust-gas aftertreatment element (16), and **in that**, in said bypass operating mode, it is also provided that the second cylinder group (8) as the remaining cylinder group of the internal combustion engine (2) is operated selectively in a fired operating mode, in particular in a partially fired operating mode with a reduced fuel quantity in relation to a defined normal operating mode and/or in relation to a fuel quantity dosed into the at least one bypass cylinder group (7), or in a non-fired operating mode, as a function of defined operating parameters of the internal combustion engine (2), in particular as a function of defined exhaust-gas recirculation parameters and/or intake air parameters and/or exhaust-gas aftertreatment element heating parameters.

6. Method according to Claim 5, **characterized in that**, in the bypass operating mode, the at least one control and/or regulating device (18) activates the discharge line shut-off element (17), the at least one exhaust-gas recirculation shut-off element (33, 34) and the bypass shut-off element (22) in such a way that:
- the bypass shut-off element (22) at least partially permits the bypass exhaust-gas flow through the bypass line (20),
- the discharge line shut-off element (17) at least partially blocks the exhaust-gas flow through the turbine discharge line (15), and
- the at least one exhaust-gas recirculation shut-off element (33, 34) at least partially opens up the flow connection between the second untreated exhaust-gas line (6) leading away from the second cylinder group (8) as the remaining cylinder group and the intake air line (13), and/or at least partially blocks the flow connection between the first untreated exhaust line (4) leading away from the first cylinder group (7) as the bypass cylinder group and the intake air line (13),
such that in the bypass operating mode:
- the exhaust gas from the first cylinder group (7) operated in a fired operating mode flows to a predefined extent, in particular substantially entirely, as a hot exhaust-gas flow through the bypass line (20), and
- the gas from the second cylinder group (8), which is operated selectively in a fired operating mode, in particular in a partially fired operating mode with a reduced fuel quantity in relation to a defined normal operating mode and/or in relation to the fuel quantity dosed into the at least one bypass cylinder group (7), or in a non-fired operating mode, is pumped substantially in a circuit and recirculated to the intake air line (13).

7. Method according to Claim 5 or Claim 6, **characterized in that**, in the bypass operating mode, in the case of at least one remaining cylinder group (8) operated in a partially fired operating mode with a reduced fuel quantity in relation to a defined normal operating mode and/or in a non-fired operating mode, a fuel quantity which is higher in relation to a defined normal operating mode of the internal combustion engine (2) is dosed into at least one bypass cylinder group (7) operated in a fired operating mode.

8. Exhaust-gas aftertreatment device for carrying out a method according to one of the preceding method claims, having an exhaust tract which branches off in multi-channel form from the internal combustion engine (2) and which has a plurality of untreated exhaust-gas lines (4, 6) through which in each case one untreated exhaust-gas flow passes and which are assigned in each case to different groups (7, 8) of cylinders of the internal combustion engine (2), having at least one bypass line (20) which can be shut off by means of at least one bypass shut-off element (22) and/or which has if appropriate at least one bypass line exhaust-gas aftertreatment element (24), in particular a hydrolysis catalytic converter, and which branches off upstream of an exhaust-gas turbine (10) of an exhaust-gas turbocharger (11) from at least one, preferably from only some, of the untreated exhaust lines (4, 6) leading to the exhaust-gas turbine (10) and which opens downstream of the exhaust-gas turbine (10) at an opening-in position (21) into a turbine discharge line (15) which proceeds from the exhaust-gas turbine (10), wherein at least one discharge line exhaust-gas aftertreatment element (16), preferably an SCR catalytic converter, is positioned downstream of the exhaust-gas turbine (10) downstream of the opening-in position (21) of the bypass line (20), having at least one control and/or regulating device (18) by means of which, in a bypass operating mode of the internal combustion engine (2), which is predefined as a function of defined operating parameters of the internal combustion engine (2), in particular in the idle or low-load operating mode of the internal combustion engine (2), a predefined quantity of a bypass exhaust-gas flow flowing via the at least one bypass line (20) can be branched off from only one untreated exhaust-gas flow or from only some of the untreated exhaust-gas flows of the untreated exhaust-gas lines (4, 6) from at least one group of cylinders operated in a fired operating mode, said group forming a bypass cylinder group (7) in the bypass operating mode, and wherein at least one discharge line shut-off element (17) formed by an engine braking flap is arranged in the turbine discharge line (15) and is coupled to the control and/or regulating device (18) such that it can be at least partially shut off in the bypass operating mode, such that a predefined quantity of a hot bypass exhaust-gas flow flows past the exhaust-gas turbine (10) in the direction of the turbine discharge line (15), and that an exhaust-gas recirculation line (27, 28) leads from at least one of the untreated exhaust lines (4, 6), preferably from at least one untreated exhaust-gas line (6) from which the bypass line (20) does not branch off, to an intake air line (13) upstream of the internal combustion engine (2), wherein at least one exhaust-gas recirculation shut-off element (33, 34) is arranged in each exhaust-gas recirculation line (27, 28).

9. Exhaust-gas aftertreatment device according to Claim 8, **characterized in that** the internal combustion engine (2) or each cylinder bank of the internal combustion engine (2) is of two-channel design and has a first untreated exhaust-gas line (4), through which a first untreated exhaust-gas flow of a first cylinder group (7) flows, and a second untreated exhaust-gas line (6), through which a second untreated exhaust-gas flow of a second cylinder group (8) flows, wherein it is preferably provided that the bypass line (20) which can be shut off by means of at least one bypass shut-off element (22) is branched off from only one of the two untreated exhaust-gas lines (4, 6), in particular from an untreated exhaust-gas line (4) which is assigned to a bypass cylinder group (7) in the bypass operating mode.

10. Exhaust-gas aftertreatment device according to either of Claims 8 and 10, **characterized in that** the exhaust-gas turbine (10) is of multi-channel design and has one turbine channel (9, 14) for each of the untreated exhaust-gas lines (4, 6), wherein one untreated exhaust-gas line (4, 6) together with an associated turbine channel (9, 14) forms in each case one separate exhaust-gas channel (3, 5), wherein it is preferably provided that the at least one exhaust-gas recirculation line (27') and the at least one bypass line (20) branch off from different untreated exhaust-gas lines (4, 6) such that, at least in the bypass operating mode, it is possible for the recirculation gas flow and bypass exhaust-gas flow to be extracted from separate exhaust-gas channels (3, 5).

11. Exhaust-gas aftertreatment device according to Claim 10, **characterized in that** the at least one exhaust-gas channel (5) at the exhaust-gas recirculation side and the at least one exhaust-gas channel (3) at the bypass side are designed so as to be variable in terms of flow cross section by means of a slide and/or flap arrangement, or so as to be permanently different, in predefined regions, in particular at the untreated exhaust-gas line side and/or at the turbine channel side, wherein the flow cross section is preferably designed to be different, or variable, in such a way that, with regard to the normal operating mode or non-bypass operating mode of the internal combustion engine, the exhaust-gas back pressure is higher in the at least one exhaust-gas channel (5) at the exhaust-gas recirculation side than in the exhaust-gas channel (3) at the bypass side.

12. Exhaust-gas aftertreatment device according to Claim 10 or 11, **characterized in that** an exhaust-gas recirculation line (27') is provided which branches off upstream of the exhaust-gas turbine (10) from a second untreated exhaust-gas line (6) assigned to a second turbine channel (14) and which leads to an intake air line (13) upstream of the internal combustion engine (2), and **in that** the bypass line (20) branches off from a first untreated exhaust-gas line (4) assigned to a first turbine channel (3), wherein it is preferably provided that a turbine housing of the exhaust-gas turbine (10) is of asymmetrical design, such that the second turbine channel (5) at the exhaust-gas recirculation side has a smaller flow cross section and/or opening cross section than the first turbine channel (3) at the bypass side.

## Revendications

1. Procédé de post-traitement d'un flux de gaz d'échappement d'un moteur à combustion interne multicylindre d'un véhicule, notamment d'un véhicule utilitaire comportant un système de gaz d'échappement relié en multi flux au moteur à combustion interne (2), ayant plusieurs conduites de gaz d'échappement bruts (4, 6) traversées chacune d'un flux de gaz d'échappement bruts et associées chacune à des groupes différents (7, 8) de cylindres du moteur à combustion interne (2),
* pour un mode de fonctionnement en dérivation, prédéfini du moteur à combustion interne (2) notamment au ralenti ou à faible charge du moteur à combustion interne (2), une quantité prédéfinie d'un flux de gaz de dérivation est dérivée par au moins une conduite de dérivation (20) de seulement un flux de gaz d'échappement brut ou de seulement une partie des flux de gaz d'échappement brut des conduites de gaz d'échappement brut (4, 6) d'un groupe de cylindres déclenchés, formant un groupe de cylindre de dérivation (7) en mode de dérivation et cette quantité prédéfinie est fournie à un élément de post-traitement de gaz d'échappement (16) en aval de la turbine des gaz d'échappement (10), et en passant à côté de la turbine des gaz d'échappement (10) d'un turbocompresseur de gaz d'échappement (11), et
* et dans ce mode de fonctionnement en dérivation, en outre, au moins un groupe résiduel de cylindres (8) du moteur à combustion interne (2) dont le flux de gaz d'échappement bruts ne fournit pas le flux de gaz d'échappement de dérivation, est déclenché de manière sélective selon des paramètres de fonctionnement définis du moteur à combustion interne (2) notamment en fonction de paramètres définis de recyclage des gaz d'échappement et/ou de paramètres d'aspiration d'air et/ou de paramètres de chauffage de l'élément de post-traitement des gaz d'échappement, notamment
* n'est pas déclenché ou n'est déclenché que de manière partielle avec une dose de carburant réduite par rapport à la quantité de carburant dosée pour le mode de fonctionnement normal défini du moteur à combustion interne (2) et/ou par rapport au moins une quantité de carburant dosée dans au moins un groupe de cylindres de dérivation (7), et
* au moins l'une des conduites de gaz d'échappement brut (4, 6) a une conduite de recyclage des gaz d'échappement (27, 28) reliée à la conduite d'aspiration d'air (13) en amont du moteur à combustion interne (2),
* dans chaque conduite de recyclage de gaz d'échappement (27, 28), il y a au moins un élément de coupure (33, 34) du recyclage de gaz d'échappement commandé par une installation de commande et de régulation (18) selon des paramètres de fonctionnement définis du moteur à combustion interne (2) pour qu'à des instants prédéfinis, une quantité définie de gaz soit recyclée dans la conduite d'aspiration d'air (13),
* de manière préférentielle les éléments de coupure (33, 34) de recyclage des gaz d'échappement couplent entre eux plusieurs conduites de recyclage de gaz d'échappement (27, 28) et/ou sont réalisés pour que ces conduites soient commandées en commun et/ ou séparément par l'installation de commande et/ou de régulation (18) selon des paramètres de fonctionnement prédéfinis du moteur à combustion interne (2), et
* l'installation de commande et/ou de régulation (18) commande en mode de dérivation un élément de coupure (17) installé dans la conduite de sortie (15) de la turbine, au moins un élément de coupure de recyclage de gaz d'échappement (33, 34) et un ou chaque élément de coupure de dérivation installé dans la ou dans chaque conduite de dérivation (20) de façon que :
- l'élément de coupure de dérivation (22) libère au moins partiellement le flux de gaz d'échappement de dérivation dans la conduite de dérivation (20),
- l'élément de coupure (17) de la conduite de sortie coupe au moins partiellement le flux des gaz d'échappement dans la conduite de sortie de turbine (15), et
- au moins un élément de coupure de recyclage de gaz d'échappement (33, 34) libère au moins partiellement la communication entre au moins une conduite de gaz d'échappement bruts (6) d'au moins un groupe de cylindres résiduels (8) et libère au moins partiellement la conduite d'aspiration d'air (13) et/ou ferme la communication entre au moins l'une des conduites de gaz d'échappement bruts (4) d'au moins un groupe de cylindres de dérivation (7) et la conduite d'aspiration d'air (13),
de façon qu'en mode de dérivation :
- les gaz d'au moins un groupe de cylindres de dérivation (7), déclenchés, traversent suivant un degré prédéfini notamment pratiquement en totalité, la conduite de dérivation (20) comme flux de gaz d'échappement chauds, et
- les gaz d'échappement provenant d'au moins un groupe de cylindres résiduels (8) déclenchés sélectivement, notamment déclenchés partiellement avec une quantité de carburant réduite par rapport à la quantité de carburant dosée côté dérivation et/ou par rapport au mode de fonctionnement normal ou encore non déclenchés, sont pompés essentiellement en boucle et recyclés dans la conduite d'aspiration d'air (13).

2. Procédé selon la revendication 1,
**caractérisé en ce que**
l'élément de coupure (17) de la conduite de sortie, formé par un volet de frein-moteur, est installé dans la conduite de sortie de turbine (15) entre la turbine de gaz d'échappement (10) et l'élément de post-traitement des gaz d'échappement (16), ce volet fonctionnant comme frein-moteur lorsque le moteur à combustion interne (2) fonctionnant sans déclenchement est en frein-moteur, et, dans ce cas, aucun flux de gaz d'échappement de dérivation n'est extrait par la conduite de dérivation (20) et en mode de fonctionnement normal, déclenché le volet de frein-moteur du moteur à combustion interne (2), est ouvert et libère la veine de gaz d'échappement par la conduite d'évacuation de la turbine (15).

3. Procédé selon la revendication 1,
**caractérisé en ce que**
les éléments de coupure de recyclage de gaz d'échappement (33, 34) de plusieurs conduites de recyclage de gaz d'échappement (27, 28) sont commandés et actionnés en mode de dérivation de façon que pratiquement seuls les gaz d'au moins un groupe de cylindres (8) résiduels déclenchés sélectivement ou fonctionnant sans être déclenchés, sont recyclés dans la conduite d'air d'aspiration et que les gaz d'échappement d'au moins un groupe de cylindres de dérivation (7) traversent suivant un degré prédéfini, de préférence pratiquement en totalité, la conduite de dérivation (20) comme flux de gaz d'échappement de dérivation.

4. Procédé selon l'une des revendications 1 à 3,
**caractérisé en ce que**
en mode de dérivation d'au moins un groupe de cylindres de dérivation (7) fonctionnant avec déclenchement, on ajoute par dosage une quantité de carburant de mesure définie plutôt que pour au moins le groupe de cylindres (8) résiduels, la différence de quantité étant prédéfinie de manière préférentielle pour qu'au moins un groupe de cylindres (8) résiduels, reçoive au maximum la moitié de la quantité de carburant dosée fournie à au moins un groupe de cylindres de dérivation (7).

5. Procédé selon l'une des revendications 1 à 4,
**caractérisé en ce que**
- le moteur à combustion interne (2) ou chaque banc de cylindres du moteur à combustion interne est réalisé en double flux, et comporte une première conduite de gaz d'échappement bruts (4) traversée par le flux des gaz d'échappement d'un premier groupe de cylindres (7) et une seconde conduite de gaz d'échappement bruts (6) d'un second groupe de cylindres (8) traversée par un second flux de gaz d'échappement bruts de façon que :
- le flux de gaz d'échappement de dérivation dérive seulement du premier flux de gaz d'échappement bruts provenant du premier groupe de cylindres (7) fonctionnant comme groupe de cylindres de dérivation avec déclenchement et il est conduit comme flux de gaz de dérivation de gaz chauds contournant la turbine à gaz (10) pour arriver dans l'élément de post-traitement des gaz d'échappement (16) de la conduite de sortie, et
- dans ce mode de dérivation, en outre, le second groupe de cylindres (8) est déclenché sélectivement comme groupe de cylindres résiduels du moteur à combustion interne (2) selon des paramètres de fonctionnement définis du moteur à combustion interne (2) notamment en fonction de paramètres de recyclage de gaz d'échappement, et/ou de paramètres d'air aspiré et/ou de paramètres de chauffage de l'élément de post-traitement des gaz d'échappement, le déclenchement, et/ou notamment avec déclenchement partiel pour une quantité de carburant réduite par rapport à celle du mode de fonctionnement normal défini et/ou par rapport à la quantité de carburant dosée, réduite dans au moins un groupe de cylindre de dérivation (7) ou fonctionne sans déclencheur.

6. Procédé selon la revendication 5,
**caractérisé en ce qu'**
en mode de fonctionnement de dérivation, de l'élément de coupure (17) de la conduite de sortie, au moins une installation de commande et/ou de régulation (18), commande au moins un élément de coupure de recyclage de gaz d'échappement (33, 34) et l'élément de coupure de dérivation (22) pour que :
- l'élément de coupure de dérivation (22) libère au moins partiellement le flux de gaz d'échappement de dérivation à travers la conduite de dérivation (20),
- l'élément de coupure (17) de la conduite de sortie ferme au moins partiellement le flux de gaz d'échappement à travers la conduite de sortie (15) du turbine, et
- au moins un élément de coupure de recyclage de gaz d'échappement (33, 34) libère au moins partiellement la communication entre la seconde conduite de gaz d'échappement brut (6) sortant du second groupe de cylindres (8) constituant le groupe de cylindres résiduels et la conduite d'air d'aspiration (13) et/ou ferme au moins partiellement la communication entre la première conduite de gaz d'échappement brut (4) sortant du premier groupe de cylindres (7) comme un groupe de cylindres de dérivation et la conduite d'aspiration (13),
de sorte qu'en mode de dérivation :
- les gaz d'échappement du premier groupe de cylindre (7) fonctionnant avec déclenchement, traversent suivant une quantité définie notamment pratiquement en totalité, la conduite de dérivation (20) comme flux de gaz chauds, et
- les gaz du second groupe de cylindres (8) déclenchés sélectivement notamment avec une quantité de carburant réduite par rapport à une quantité de carburant dosée pour le mode de fonctionnement normal défini et/ou par rapport à la quantité de carburant dosée dans au moins un groupe de cylindres de dérivation (7), ou encore fonctionnant sans être déclenchés, sont pratiquement pompés en boucle ou recyclés dans la conduite d'aspiration d'air (13).

7. Procédé selon la revendication 5 ou la revendication 6,
**caractérisé en ce qu'**
en mode de dérivation, dans le cas d'au moins un groupe de cylindres (8), résiduels, fonctionnant de manière partiellement déclenchée avec une quantité de carburant réduite par rapport à celle définie pour le mode de fonctionnement normal ou encore fonctionnant de manière non déclenchée, on ajoute par dosage une quantité de carburant plus importante que celle du mode de fonctionnement normal, défini, du moteur à combustion interne (2) dans au moins un groupe de cylindres de dérivation (7) fonctionnant de manière déclenchée.

8. Dispositif de post-traitement des gaz d'échappement pour la mise en oeuvre d'un procédé selon l'une des revendications précédentes, comportant un système de gaz d'échappement dérivant en multi flux du moteur à combustion interne (2),
en plusieurs conduites de gaz d'échappement (4, 6) traversées chacune par un flux de gaz d'échappement bruts et associées à des groupes différents (7, 8) de cylindres du moteur à combustion interne (2), ayant au moins une conduite de dérivation (20) qui peut être coupée par au moins un élément de coupure de dérivation (22) et/ou le gaz échéant a au moins un élément de post-traitement des gaz d'échappement (24) de conduite de dérivation notamment un catalyseur d'hydrolyse, cette conduite de dérivation étant issue en amont de la turbine à gaz (10) d'un turbocompresseur de gaz d'échappement (11), de préférence d'au moins une partie, des conduites de gaz d'échappement bruts (4,6) reliés à la turbine de gaz d'échappement (10) et cette conduite de dérivation débouche en aval de la turbine de gaz d' échappement (10) par une embouchure (21) dans une conduite de sortie (15) de turbines issues de la turbine à gaz (10),
* la turbine à gaz (10) étant suivie en aval de l'embouchure (21) de la conduite de dérivation (20), d'au moins un élément de post-traitement des gaz d'échappement (16) de la conduite d'évacuation, de préférence un catalyseur SCR,
- au moins une station de commande et/ou de régulation (18) par laquelle, dans un mode dérivation prédéfini du moteur à combustion interne (2) notamment au ralenti ou à faible charge du moteur à combustion interne (2), selon des paramètres de fonctionnement défini du moteur à combustion interne (2), une quantité prédéfinie d'un flux de gaz d'échappement de dérivation passant par au moins une conduite de dérivation (20), est prélevée d'au moins un flux de gaz d'échappement bruts ou d'au moins une partie des flux de gaz d'échappement bruts des conduites de gaz d'échappement bruts (4, 6) d'au moins un groupe formant un groupe de cylindres de dérivation (7) en mode dérivation de cylindres fonctionnant avec déclenchement, et
* au moins un élément de coupure (17) de conduite de sortie constitué de préférence par un volet de frein moteur est installé dans la conduite de sortie (15) de la turbine, cet élément étant couplé à l'installation de commande et/ou de régulation (18) pour qu'en mode de dérivation il coupe au moins partiellement pour qu'une quantité prédéfinie d'un flux de gaz d'échappement de dérivation, chauds contournent la turbine des gaz d'échappement (10) vers la conduite de sortie (15) de la turbine et pour qu'au moins l'une des conduites de gaz d'échappement bruts (4, 6) de préférence au moins une telle conduite de gaz d'échappement bruts (6) d'où n'est pas issue la conduite de dérivation (20) comporte une conduite de recyclage de gaz d'échappement (27, 28) reliée à une conduite d'aspiration d'air (13) en amont du moteur à combustion interne (2),
* chacune des conduites de recyclage de gaz d'échappement (27, 28) ayant au moins un élément de coupure de recyclage de gaz d'échappement (33, 34).

9. Dispositif de post-traitement des gaz d'échappement selon la revendication 8,
**caractérisé en ce que**
le moteur à combustion interne (2) ou chaque banc de cylindres du moteur à combustion interne (2) est à double flux et comporte une première conduite de gaz d'échappement bruts (4) traversée par un premier flux de gaz d'échappement brut d'un premier groupe de cylindres (7) et une seconde conduite de gaz d'échappement bruts (6) traversée par un second flux de gaz d'échappement bruts provenant d'un second groupe de cylindres (8), et
* de préférence la conduite de dérivation (20) qui peut être coupée par au moins un élément de coupure de dérivation (22) est issue d'au moins l'une des deux conduites de gaz d'échappement bruts (4, 6) notamment de la conduite de gaz d'échappement bruts (4) associée en mode de dérivation à un groupe de cylindre de dérivation (7).

10. Dispositif de post-traitement des gaz d'échappement selon l'une des revendications 8,
**caractérisé en ce que**
la turbine de gaz d'échappement (10) est une turbine multi flux et pour chacune des conduites de gaz d'échappement bruts (4, 6) il comporte un flux de turbine (9, 14),
* une conduite de gaz d'échappement bruts (4, 6) avec son flux de turbine (9, 14) constituant chaque fois un flux séparé de gaz d'échappement (3, 5),
* de préférence au moins une conduite de retour de gaz d'échappement (27') et au moins une conduite de dérivation (20) partant de conduites de gaz d'échappement bruts (4, 6) différentes étant réalisées pour qu'au moins en mode de dérivation on puisse avoir une prise qui sépare le gaz de recirculation du flux de gaz d'échappement de dérivation, distincts selon les flux de gaz d'échappement (3, 5).

11. Dispositif de post-traitement des gaz d'échappement selon la revendication 10,
**caractérisé en ce qu'**
au moins un flux de gaz d'échappement (5) côté recyclage des gaz d'échappement et au moins un flux de gaz d'échappement (3) côté dérivation dans des zones prédéfinies notamment du côté de la conduite de gaz d'échappement bruts et/ou du côté du flux de la turbine, a une section de passage qui peut être modifiée par un dispositif de tiroir et/ou de volet ou est réalisée différemment de manière permanente,
* la section de passage étant de préférence réalisée différemment ou de manière variable pour que la pression antagoniste des gaz d'échappement dans au moins un flux de gaz d'échappement (5) côté recyclage des gaz d'échappement soit plus grand que dans le flux de gaz d'échappement (3) côté dérivation par rapport au mode de fonctionnement normal ou au mode de fonctionnement sans dérivation.

12. Dispositif de post-traitement des gaz d'échappement selon la revendication 10 ou 11,
**caractérisé par**
- une conduite de recyclage de gaz d'échappement (27') qui dérive en amont de la turbine de gaz d'échappement (10), d'une seconde conduite de gaz d'échappement bruts (6) associée à un second flux de turbine (14) et rejoint une conduite d'aspiration d'air (13) en amont du moteur à combustion interne (2), et
- la conduite de dérivation (20) dérive d'une première conduite de gaz d'échappement bruts (4) associée à un premier flux de turbine (3),
* de préférence, le carter de la turbine de gaz d'échappement (10) est réalisé de manière asymétrique pour que le second flux de turbine (5) côté recyclage des gaz d'échappement possède une section de passage plus petite et/ou section d'ouverture plus petite que le premier flux de turbine coté dérivation (3).
